# EUROPEAN PATENT APPLICATION

(11) **EP 4 487 679 A1**
(43) Date of publication of application: **08.01.2025**
(21) Application number: 23760080.4
(22) Date of filing: 23.02.2023
(51) Int. Cl.: A01G 25/16, A01G 25/02

(54) **IRRIGATION SYSTEM AND CONTROL DEVICE**

(30) Priority: 28.02.2022 JP 2022029006
(71) Applicant: DENSO CORPORATION, Kariya-city, Aichi 448-8661 (JP)
(72) Inventor: HIRONO, Yusuke, Kariya-city Aichi 448-8661 (JP); NIIMI, Naohisa, Kariya-city Aichi 448-8661 (JP); KURUMADO, Norihiro, Kariya-city Aichi 448-8661 (JP)
(74) Representative: Kuhnen & Wacker Patent- und Rechtsanwaltsbüro PartG mbB
(86) International application number: PCT/JP2023/006611
(87) International publication number: WO 2023/163081

(57) **Abstract**

A first water supply valve controls a pressure of water supplied from one end portion side of a distribution tube (136) to control an amount of irrigation water from a through hole of the distribution tube. A second water supply valve controls a pressure of water supplied from another end portion side of the distribution tube (136) to control the amount of irrigation water from the through hole of the distribution tube. A first abnormality sensor detects an abnormal state of water supply from the one end portion side of the distribution tube. A second abnormality sensor detects an abnormal state of water supply from the other end portion side of the distribution tube. A control device controls a valve opening degree of the first water supply valve and the second water supply valve when an abnormal state is detected by the first abnormality sensor or the second abnormality sensor. The control device closes a water supply valve configured to control water supply from a side where an abnormal state is detected, and opens a water supply valve configured to control water supply from a side where an abnormal state is not detected.

## Description

### CROSS REFERENCE TO RELATED APPLICATION

The present application is based on Japanese Patent Application No. 2022-029006 filed on February 28, 2022. The entire disclosures of all of the above applications are incorporated herein by reference.

### TECHNICAL FIELD

The present disclosure relates to an irrigation system and a control device for controlling supply of irrigation water to a farm field.

### BACKGROUND ART

Patent Literature 1 discloses an irrigation system.

### PRIOR ART LITERATURE

### PATENT LITERATURE

PATENT LITERATURE 1: JP2013-215115A

### SUMMARY OF INVENTION

In Patent Literature 1, a case where a flow rate signal output from a flow rate sensor fluctuates by a predetermined ratio or more with respect to a predetermined flow rate during normal irrigation is detected as an abnormality. A technique of reporting a detected abnormality to a predetermined reporting destination is disclosed. The irrigation system according to Patent Literature 1 is not sufficient in terms of a restoration function of performing irrigation when a failure occurs while restricting an adverse effect due to the failure, and there is room for improvement.

An object of the present disclosure is to provide an irrigation system and a control device capable of performing irrigation with reduced adverse effects when a failure occurs during irrigation.

The multiple aspects disclosed in this description adopt different technical means to achieve respective objects. The reference numerals in parentheses described in the claims are an example showing a correspondence relationship with specific means described in the embodiments that will be described later as one aspect, and do not limit the technical scope.

An irrigation system according to an example of the present disclosure, comprises:
a distribution tube to be provided in a farm field, in which a plant is grown, and having a plurality of through holes to irrigate the farm field;
a first water supply valve configured to control pressure of water, which is supplied from a one end portion side of the distribution tube to flow down from a one end portion to an other end portion of the distribution tube, to control an amount of irrigation water from the through holes of the distribution tube;
a second water supply valve configured to control pressure of water, which is supplied from an other end portion side of the distribution tube to flow down from the other end portion to the one end portion of the distribution tube, to control an amount of irrigation water from the through holes of the distribution tube;
a first abnormality sensor configured to detect an abnormal state of water supply from the one end portion side;
a second abnormality sensor configured to detect an abnormal state of water supply from the other end portion side; and
a control device configured to control a valve opening degree of the first water supply valve and a valve opening degree of the second water supply valve, when an abnormal state is detected by the first abnormality sensor or the second abnormality sensor.

The control device is configured to
close one of the first water supply valve and the second water supply valve, which controls pressure of water supplied from a side where the abnormal state has been detected, and
open an other one of the first water supply valve and the second water supply valve, which controls pressure of water supplied from a side where the abnormal state is not detected.

According to the irrigation system, instead of stopping water supply from a side, where an abnormal state is detected, to eliminate the failure, it is possible to restore to the appropriate irrigation by performing the water supply from an opposite side. Therefore, the irrigation system is capable of performing irrigation with reduced adverse effects when a failure occurs during irrigation.

A control device according to an example of the present disclosure is configured to control
a valve opening degree of a first water supply valve configured to control pressure of water supplied from a one end portion side of a distribution tube, which has a plurality of through holes, to flow down from one end portion to an other end portion of the distribution tube to control an amount of irrigation water from the through holes of the distribution tube, and
a valve opening degree of a second water supply valve configured to control pressure of water supplied from an other end portion side of the distribution tube to flow down from the other end portion to the one end portion of the distribution tube to control an amount of irrigation water from the through holes of the distribution tube. The control device comprises:
   a calculation unit configured to detect occurrence of an abnormal state in the water supply from the one end portion side or an abnormal state in the water supply from the other end portion side, based on a sensor value detected by a first abnormality sensor, which is configured to detect an abnormal state of water supply from the one end portion side, or a sensor value detected by a second abnormality sensor, which is configured to detect an abnormal state of water supply from the other end portion side; and
   an output unit configured to output a control signal to control the valve opening degree of the first water supply valve and the valve opening degree of the second water supply valve, when occurrence of the abnormal state is detected.

The output unit is configured to output a control signal to close one of the first water supply valve and the second water supply valve, which controls pressure of water supplied from a side where the abnormal state has been detected, and open an other one of the first water supply valve and the second water supply valve, which controls pressure of water supplied from a side where the abnormal state is not detected.

According to the control device, instead of stopping the water supply from the side, where the abnormal state is detected, to eliminate the failure, it is possible to restore to the appropriate irrigation by performing the water supply from the opposite side. Therefore, the control device is capable of performing irrigation with reduced adverse effects when a failure occurs during irrigation.

### BRIEF DESCRIPTION OF THE DRAWINGS

FIG. 1 is a conceptual diagram showing an irrigation system according to a first embodiment provided in a farm field.
FIG. 2 is a partial view showing a water supply pipe and a pipe module.
FIG. 3 is a configuration diagram of the irrigation system.
FIG. 4 is a block diagram showing a monitoring unit.
FIG. 5 is a diagram showing a radio signal.
FIG. 6 is a flowchart for illustrating a sensor process.
FIG. 7 is a flowchart for illustrating an update process.
FIG. 8 is a flowchart for illustrating a monitoring process.
FIG. 9 is a flowchart for illustrating a water supply process.
FIG. 10 is a flowchart for illustrating an irrigation process.
FIG. 11 is a flowchart for illustrating a user update process.
FIG. 12 is a flowchart for illustrating a forced update process.
FIG. 13 is a cross-sectional view showing a valve device capable of being applied as a water supply valve.
FIG. 14 is a diagram showing a configuration of a drive unit provided in the valve device.
FIG. 15 is a perspective view showing a valve provided in the valve device.
FIG. 16 is a diagram showing a relationship between a rotation angle and a flow rate in the valve device.
FIG. 17 is a diagram showing a positional relationship between the water supply valve and an abnormality sensor.
FIG. 18 is a configuration diagram showing a relationship between a control device, the water supply valve, and the abnormality sensor.
FIG. 19 is a flowchart showing an operation of the water supply valve when an abnormality is detected.
FIG. 20 is a diagram showing an example of a portion where an abnormality has been detected.
FIG. 21 is a diagram for illustrating irrigation restoration when an abnormality is detected.
FIG. 22 is a flowchart showing an operation of the water supply valve when an abnormality is detected.
FIG. 23 is a diagram showing a positional relationship between a water supply valve and an abnormality sensor according to a second embodiment.
FIG. 24 is a diagram showing a positional relationship between a water supply valve and an abnormality sensor according to a third embodiment.
FIG. 25 is a configuration diagram showing a relationship between the control device, the water supply valve, and the abnormality sensor.
FIG. 26 is a diagram for illustrating irrigation restoration when an abnormality is detected.
FIG. 27 is a flowchart showing an operation of a water supply valve according to a fourth embodiment when an abnormality is detected.
FIG. 28 is a flowchart showing an operation of a water supply valve according to a fifth embodiment when an abnormality is detected.
FIG. 29 is a diagram showing a positional relationship between the water supply valve and the abnormality sensor.
FIG. 30 is a diagram for illustrating irrigation restoration when an abnormality is detected.
FIG. 31 is a diagram showing a positional relationship between a water supply valve and an abnormality sensor according to a sixth embodiment.

### DESCRIPTION OF EMBODIMENTS

Hereinafter, multiple embodiments for carrying out the present disclosure will be described with reference to the drawings. In each of the embodiments, the same reference numerals are assigned to portions corresponding to the items described in the preceding embodiments, and a repetitive description thereof may be omitted. In each of the embodiments, when only a part of the configuration is described, another embodiment previously described can be employed for the other parts of the configuration. Not only portions which are specifically clarified so as to be combined in each embodiment are capable of being combined, but also embodiments are capable of being partially combined with each other even though the combination is not clarified as long as no adverse effect is particularly generated with respect to the combination.

### <First Embodiment>

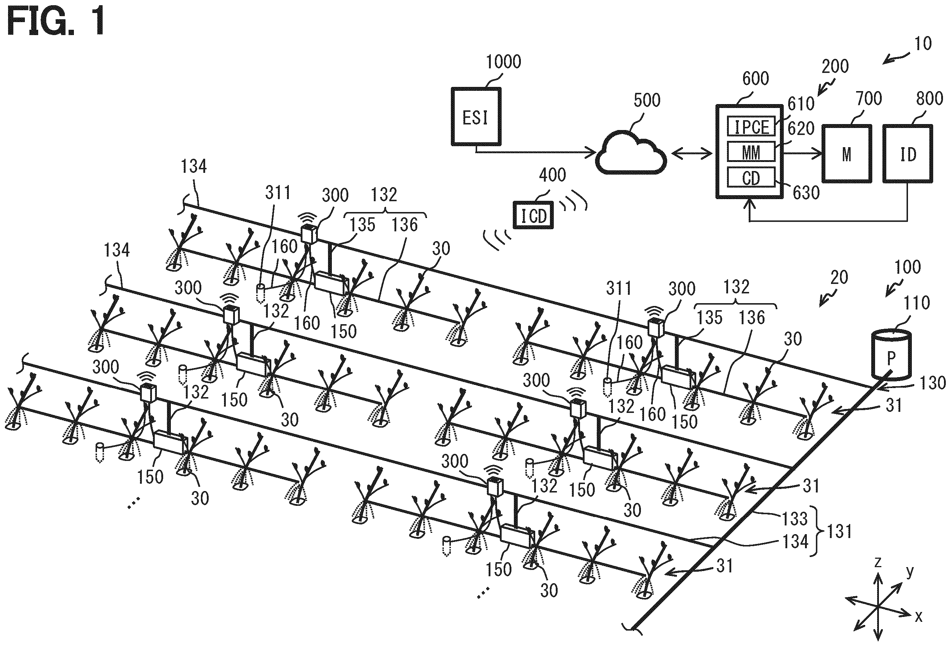

A first embodiment disclosing an irrigation system will be described with reference to FIGS. 1 to 22. Hereinafter, three directions perpendicular to one another are referred to as an x-direction, a y-direction, and a z-direction. In this description, a plane defined by the x-direction and the y-direction is along a horizontal plane. The z-direction is along a vertical direction. In the drawings, descriptions of "direction" are omitted, and the three directions are represented as x, y, and z.

### <Farm Field>

The irrigation system 10 is applied to an outdoor farm field 20 cultivated on a hill or a plain field. As shown in FIG. 1, a mode in which the irrigation system 10 is applied to the farm field 20 cultivated on a plain field will be described. The size of the farm field 20 is several tens of square meters to several 1000 square kilometers. The farm field 20 is provided with multiple growth sites such as ridges extending in the x-direction. The multiple growth sites extending in the x-direction are arranged in a manner of being separated from each other in the y-direction. Seeds or seedlings of a plant 30 are filled in each of the multiple growth sites. The plant 30 may be, for example, a grape vine, a corn, an almond, a raspberry, a leafy vegetable, or a cotton. The irrigation system 10 may be applied to the farm field 20 provided indoors such as a greenhouse.

Multiple plants 30 are grown in one growth site. The multiple plants 30 are arranged in the x-direction to form one row. Hereinafter, the multiple plants 30 arranged in a row in the x-direction are referred to as a plant group 31. In the farm field 20, multiple plant groups 31 are arranged in a manner of being separated from each other in the y-direction. The shortest separation distance in the y-direction between the multiple plant groups 31 is larger than the shortest separation distance in the x-direction between the plurality of plants 30 included in one plant group 31. An interval in the y-direction between the multiple plant groups 31 is variously changed according to the type of the growing plant 30 and the undulation and climate of the farm field 20. An interval in the y-direction between the multiple plant groups 31 is about 1 m to 10 m. Even if branches and leaves of the plants 30 grow thickly in the y-direction, a width that allows at least a person to move in the x-direction between the two plant groups 31 is ensured.

### <Irrigation System>

The irrigation system 10 includes a water supply device 100 and a control device 200. The water supply device 100 supplies irrigation water to the plants 30 in the farm field 20. The control device 200 determines a supply time point and an amount of the irrigation water supplied from the water supply device 100 to the plants 30 during an irrigation period. The control device 200 determines an irrigation schedule of the water supply device 100. The irrigation system 10 is capable of detecting an abnormal state such as water leakage or clogging during irrigation and performing irrigation restoration (fail safe) when the abnormal state occurs.

### <Water Supply Device>

The water supply device 100 includes a pump 110, a water supply pipe 130, and a pipe module 150. The pump 110 is a water supply source that supplies irrigation water to the water supply pipe 130. The pipe module 150 controls a water discharge amount of the irrigation water supplied to the water supply pipe 130.

### <Pump>

The pump 110 is in a constant driving state. Alternatively, the pump 110 is in a daytime driving state. The pump 110 pumps out the irrigation water stored in a tank or a reservoir and supplies the irrigation water to the water supply pipe 130. The irrigation water is well water, river water, rainwater, city water, or the like. As described below, the water supply pipe 130 is provided with multiple water supply valves 152. When each of the multiple water supply valves 152 is in a closed state and leakage of the irrigation water from the water supply pipe 130 does not occur, the water supply pipe 130 is filled with the irrigation water. At this time, the water pressure in the water supply pipe 130 is a value (also referred to as pump pressure) depending on a discharge capacity of the pump 110. When the water supply valve 152 is changed from the closed state to an opened state, irrigation water is discharged from the water supply pipe 130 to the farm field 20. When the water discharge amount of the irrigation water is stabilized on a time average basis, the water pressure in the water supply pipe 130 becomes a flow pressure whose water pressure is lower than the pump pressure.

### <Water Supply Pipe>

The water supply pipe 130 includes a main pipe 131 and supply pipes 132. The main pipe 131 is coupled to the pump 110. The supply pipes 132 are coupled to the main pipe 131. The pump 110 supplies irrigation water from the main pipe 131 to the supply pipes 132. The irrigation water is supplied from the supply pipes 132 to the farm field 20.

### <Main Pipe>

The main pipe 131 includes a vertical pipe 133 and horizontal pipes 134. The vertical pipe 133 extends in the y-direction. The horizontal pipe 134 extends in the x-direction. The vertical pipe 133 and the horizontal pipe 134 are coupled to each other. For this configuration, the irrigation water flows in the y-direction and the x-direction in the main pipe 131. In the example shown in FIG. 1, one vertical pipe 133 is coupled to one pump 110. Multiple horizontal pipes 134 extend in the x-direction from the vertical pipe 133 extending in the y-direction. A position of the horizontal pipe 134 in the z-direction is set to be more separated from the ground than a vertex of the matured plant 30.

The configuration shown in FIG. 1 is merely an example of a passage configuration relating to irrigation. The number of pumps 110 and vertical pipes 133 provided in the farm field 20, the number of vertical pipes 133 coupled to one pump 110, the number of vertical pipes 133 coupled to one horizontal pipe 134, and positions of the horizontal pipes 134 and the vertical pipes 133 in the z-direction are not particularly limited.

The multiple horizontal pipes 134 are arranged in a manner of being separated from each other in the y-direction. The shortest separation distance in the y-direction between the multiple horizontal pipes 134 is equal to the shortest separation distance in the y-direction between the multiple plant groups 31. One of the multiple horizontal pipes 134 is provided in one of the multiple plant groups 31. The horizontal pipe 134 extends along a direction in which multiple plants 30 included in the plant group 31 are arranged. The supply pipe 132 is coupled to the horizontal pipe 134.

### <Supply Pipe>

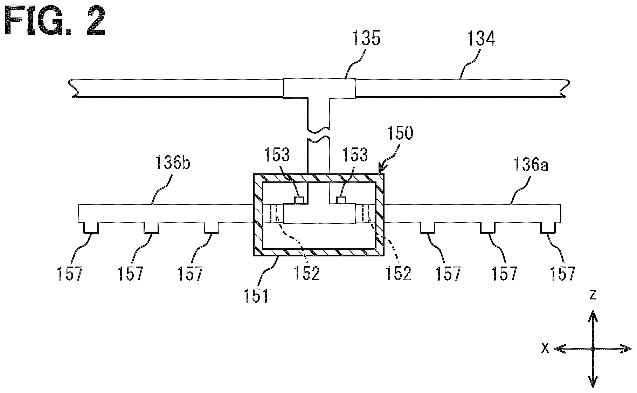

Multiple supply pipes 132 are coupled to one horizontal pipe 134. The multiple supply pipes 132 coupled to one horizontal pipe 134 are arranged in a manner of being separated from each other in the x-direction. As shown in FIG. 2, the supply pipe 132 includes a coupling pipe 135 and a distribution tube 136. The coupling pipe 135 extends downward from the horizontal pipe 134 in the z-direction. Two coupling ports that are opened in the x-direction are formed on distal ends of the coupling pipe 135. The distribution tube 136 is coupled to the two coupling ports.

The distribution tube 136 may have a pressure correction mechanism that implements a constant water discharge amount regardless of a water pressure change, or may not have a pressure correction mechanism. The distribution tube provided in the irrigation system capable of achieving the object disclosed in this description has a configuration regardless of the presence or absence of the pressure correction mechanism. The distribution tube 136 includes a first distribution tube 136a coupled to one of the two coupling ports and a second distribution tube 136b coupled to the other one of the two coupling ports. The first distribution tube 136a and the second distribution tube 136b extend in opposite directions from coupling positions with the coupling pipe 135 in the x-direction.

Each of the first distribution tube 136a and the second distribution tube 136b is provided with multiple through holes through which an inside and an outside of a tube through which the irrigation water flows communicate with each other. The multiple through holes are provided side by side at predetermined intervals in an axial direction of the tube in each tube. The through holes may be provided side by side at predetermined intervals in a circumferential direction of the tube in each tube.

The interval between the multiple through holes in the axial direction (for example, the x-direction) is equal to the interval between the multiple plants 30 in the x-direction. In the example shown in FIG. 2, three through holes are arranged in the axial direction in each of the first distribution tube 136a and the second distribution tube 136b. The interval between the multiple through holes may be different from the interval between the multiple plants 30. The number of through holes provided in each tube is not limited to three.

### <Flow of Irrigation Water>

The irrigation water supplied to the vertical pipe 133 by the pump 110 flows in the y-direction in the vertical pipe 133. The irrigation water is supplied to each of the multiple horizontal pipes 134 coupled to the vertical pipe 133. The irrigation water flows in the x-direction in each of the multiple horizontal pipes 134. The irrigation water flowing in the horizontal pipe 134 flows down to the distribution tube 136 via the coupling pipe 135. The irrigation water is discharged from the respective through holes of the first distribution tube 136a and the second distribution tube 136b, and is supplied to the plant 30.

In the example shown in FIG. 1, each distribution tube is located closer to the ground of the farm field 20 than a vertex side of the plant 30 in a height direction. The irrigation water supplied from the respective through holes of the first distribution tube 136a and the second distribution tube 136b is mainly supplied to the trunks and roots of the plants 30.

The through hole is preferably provided at a position higher than a portion of each tube facing the ground. The irrigation water discharged from the through hole at such a position spreads in a radial direction with respect to a central axis of the tube, and can be sprayed at a position away from the tube.

### <Pipe Module>

As shown in FIG. 2, the pipe module 150 is provided in the supply pipe 132. The pipe module 150 includes a housing box 151, water supply valves 152, and water pressure sensors 153. The water supply valves 152 and the water pressure sensors 153 are housed inside the housing box 151.

### <Water Supply Valve>

The water supply valve 152 is provided in the coupling pipe 135 at a position close to a respective one of the first distribution tube 136a and the second distribution tube 136b. All the through holes are provided in the first distribution tube 136a and the second distribution tube 136b between the water supply valve 152 and the respective distal end portions separated from the coupling pipe 135.

When the water supply valve 152 is brought into the opened state, the coupling pipe 135 communicates with the through holes. Accordingly, the irrigation water is discharged from the through holes. Conversely, when the water supply valve 152 is brought into the closed state, the communication between the coupling pipe 135 and the through hole is blocked. Accordingly, the discharge of the irrigation water from the through holes is stopped.

A water supply valve 152 provided in the first distribution tube 136a and a water supply valve 152 provided in the second distribution tube 136b are independently controlled in opening degree by the control device 200. With the opening degree control, the discharge of the irrigation water from the through holes of the first distribution tube 136a and the discharge of the irrigation water from the through holes of the second distribution tube 136b are independently controlled.

The control device 200 freely controls a valve opening degree of the water supply valve 152 from a predetermined opening degree to full opening. The water supply valve 152 is a flow rate adjustment valve or a pressure adjustment valve capable of precisely changing the flow rate passing through the water supply valve 152 by adjusting the pressure on a downstream side or an upstream side. The predetermined opening degree is set to a value including an opening degree at which the valve is slightly opened or an opening degree of 0%, that is, a fully closed state. The control device 200 controls the valve opening degree of the water supply valve 152 to control a discharge flow rate per unit time or a discharge flow velocity of water discharged from each through hole. With the control, the control device 200 is capable of controlling a water splash distance that is a distance at which irrigation water discharged from the distribution tube 136 is separated from the distribution tube 136 and lands. The water splash distance is a distance between the distribution tube 136 and a soil landing point of the irrigation water splashed from the distribution tube 136 through the through holes. The technique of controlling the water splash distance is capable of performing efficient irrigation to a location requiring irrigation and also contributes to water saving.

The control device 200 determines the water splash distance of the irrigation water based on the type of the plants 30 to which the irrigation water is supplied, the range of the plow layer of the farm field 20, and the like. The control device 200 controls the valve opening degree of the water supply valve 152 so as to obtain the determined water splash distance. For example, the valve opening degree of the water supply valve 152 is controlled so as to increase the water splash distance when the plant 30 spreads roots thereof widely or the plow layer is shallow and wide. The valve opening degree of the water supply valve 152 is controlled so as to reduce the water splash distance when the plant 30 has a deep root or the plow layer is located near the distribution tube 136. In other words, the water splash distance can be referred to as an irrigation distance.

### <Water Pressure Sensor>

The water pressure sensor 153 is provided in a vicinity of a portion of the coupling pipe 135 to which a respective one of the first distribution tube 136a and the second distribution tube 136b is coupled. Each water pressure sensor 153 is a pressure sensor that detects water pressure in the coupling pipe 135. The water pressure detected by the water pressure sensor 153 is output to the control device 200. The water pressure sensor 153 may be provided between a coupling part of the first distribution tube 136a to the coupling pipe 135 and the water supply valve 152, or between a coupling part of the second distribution tube 136b to the coupling pipe 135 and the water supply valve 152. The water pressure sensor 153 may be provided in a vicinity of a coupling part of the coupling pipe 135 with the horizontal pipe 134.

When the water supply valve 152 is brought into the closed state and the coupling pipe 135 is filled with the irrigation water, the pump pressure is detected by the water pressure sensor 153. When the water supply valve 152 is changed from the closed state to the opened state, the irrigation water is discharged from the distribution tube 136. When the water discharge amount of the irrigation water is stabilized on a time average, a fluid pressure is detected by the water pressure sensor 153. When the water supply valve 152 is changed from the opened state to the closed state, the discharge of the irrigation water from the water supply pipe 130 is stopped. The water pressure in the water supply pipe 130 gradually recovers from the fluid pressure to the pump pressure. The water pressure sensor 153 detects the water pressure in a transition period in which the water pressure gradually recovers from the fluid pressure to the pump pressure.

When the water supply pipe 130 or the water supply valve 152 is damaged and irrigation water leaks from the damaged portion, the water pressure detected by the water pressure sensor 153 decreases. Accordingly, whether the damage has occurred can be detected. The damage detection process is executed by the control device 200. The irrigation system 10 may include a flow rate sensor that detects a flow rate of a fluid flowing through the passage, instead of the water pressure sensor 153. The irrigation system 10 performs feedback control of the valve opening degree of the water supply valve 152 using detection values of the water pressure sensor 153 and the flow rate sensor.

### <Control Device>

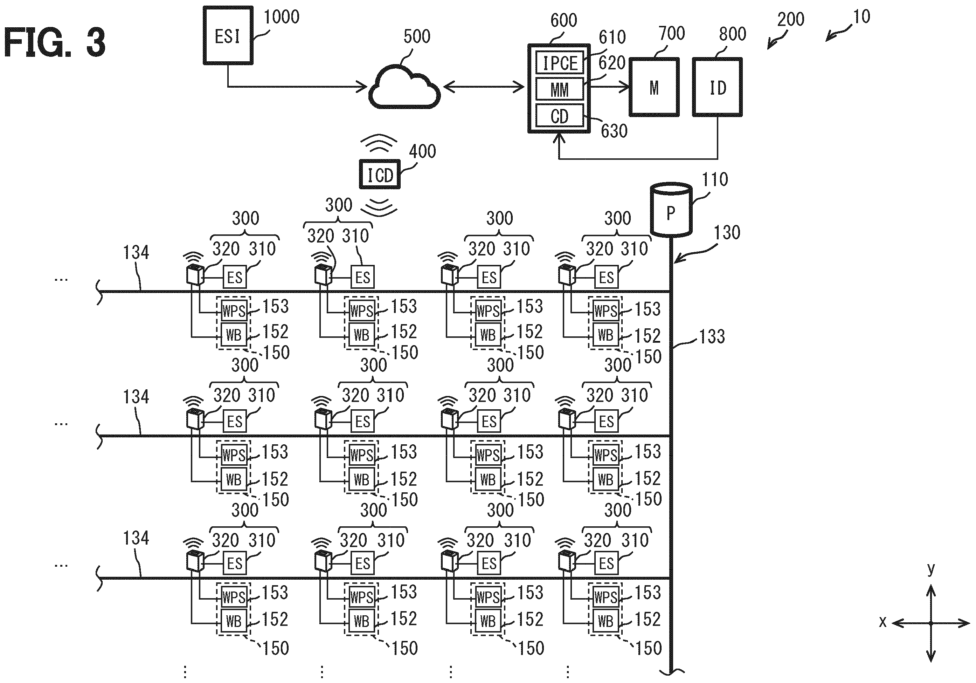

As shown in FIGS. 1 and 3, the control device 200 includes monitoring units 300, an integrated communication device 400, an information storage unit 500, and an integrated calculation unit 600. In the drawings, the integrated communication device 400 is represented as ICD. The control device 200 includes multiple monitoring units 300. Each of the multiple monitoring units 300 corresponds to a predetermined divided area in the farm field 20. For example, one monitoring unit 300 is provided corresponding to one pipe module 150. The monitoring unit 300 and the pipe module 150 are electrically connected to each other.

A water pressure detected by the water pressure sensor 153 is input to the monitoring unit 300. The monitoring unit 300 detects an environment value that is a physical quantity related to an environment of the farm field 20. Each of the multiple monitoring units 300 outputs the water pressure and the environment value to the integrated communication device 400 by wireless communication.

The integrated communication device 400 outputs the water pressure and the environment values received from each monitoring unit 300 to the information storage unit 500 by wireless communication. The information storage unit 500 stores the water pressure and the environment values. An example of the information storage unit 500 is a so-called cloud. The integrated calculation unit 600 reads various pieces of information such as the water pressure and the environment values stored in the information storage unit 500. The integrated calculation unit 600 appropriately processes the read various pieces of information, and displays the various kinds of information and the processing results on a monitor 700 of a smartphone or a personal computer of a user.

The integrated calculation unit 600 is provided in the smartphone or the personal computer of the user. The integrated calculation unit 600 includes information processing calculation equipment 610, a memory 620, and a communication device 630. In the drawings, the information processing calculation equipment 610 is represented as IPCE, the memory 620 is represented as MM, and the communication device 630 is represented as CD. The information processing calculation equipment 610 includes a processor. The information processing calculation equipment 610 performs calculation processing related to the irrigation process. The function is implemented by downloading an irrigation application program to the information processing calculation equipment 610. The integrated calculation unit 600 may be a processing device implemented on a cloud. In this case, the integrated calculation unit 600 and the information storage unit 500 may be implemented on the cloud.

The memory 620 is a non-transitory tangible storage medium that non-temporarily stores various programs and various kinds of information that can be read by a computer or a processor. The memory 620 includes a volatile memory and a non-volatile memory. The memory 620 stores various pieces of information input to the communication device 630 and a processing result of the information processing calculation equipment 610. The information processing calculation equipment 610 executes various calculation processes using the information stored in the memory 620.

The communication device 630 has a wireless communication function. The communication device 630 converts the received radio signal into an electric signal and outputs the electric signal to the information processing calculation equipment 610. The communication device 630 outputs the processing result of the information processing calculation equipment 610 as a radio signal. Hereinafter, the information processing calculation equipment 610, the memory 620, and the communication device 630 are not particularly distinguished from one another, and the technical contents of the present embodiment will be described using the integrated calculation unit 600 that is collectively referred to. The information processing calculation equipment 610 corresponds to a processing calculation unit.

The user inputs a user instruction related to the irrigation process or the irrigation schedule to the integrated calculation unit 600 using an input device 800 such as a touch panel or a keyboard. The integrated calculation unit 600 outputs an irrigation processing command or determines the irrigation schedule based on the user instruction and various pieces of information read from the information storage unit 500. When there is no instruction from the user, the integrated calculation unit 600 automatically determines the irrigation schedule based on various pieces of information.

When detecting the irrigation processing command or determining a supply start time point of irrigation in the irrigation schedule, the integrated calculation unit 600 outputs an instruction signal for controlling the water supply valve 152 to the information storage unit 500. The instruction signal is input from the information storage unit 500 to the monitoring unit 300 via the integrated communication device 400. The monitoring unit 300 controls the output and non-output of a water supply signal to the water supply valve 152 based on the instruction signal. Accordingly, the opened/closed state of the water supply valve 152 is controlled. As a result, the supply of the irrigation water to the farm field 20 is controlled. At least one of the instruction signal and the water supply signal corresponds to the control signal.

### <Divided Area>

As shown in FIG. 1, one monitoring unit 300 is provided for one supply pipe 132. As an example, as shown in FIG. 3, multiple monitoring units 300 and the water supply valves 152 and the water pressure sensors 153 provided in the multiple pipe modules 150 are arranged in a matrix in the farm field 20 with the x-direction as a row direction and the y-direction as a column direction.

With this configuration, the environment of each of the multiple divided areas divided by the row direction and the column direction is individually monitored by a monitoring unit 300 corresponding to each divided area. The supply of the irrigation water to each of the multiple divided areas is individually controlled by the corresponding monitoring unit 300 and the corresponding pipe module 150.

### <Monitoring Unit>

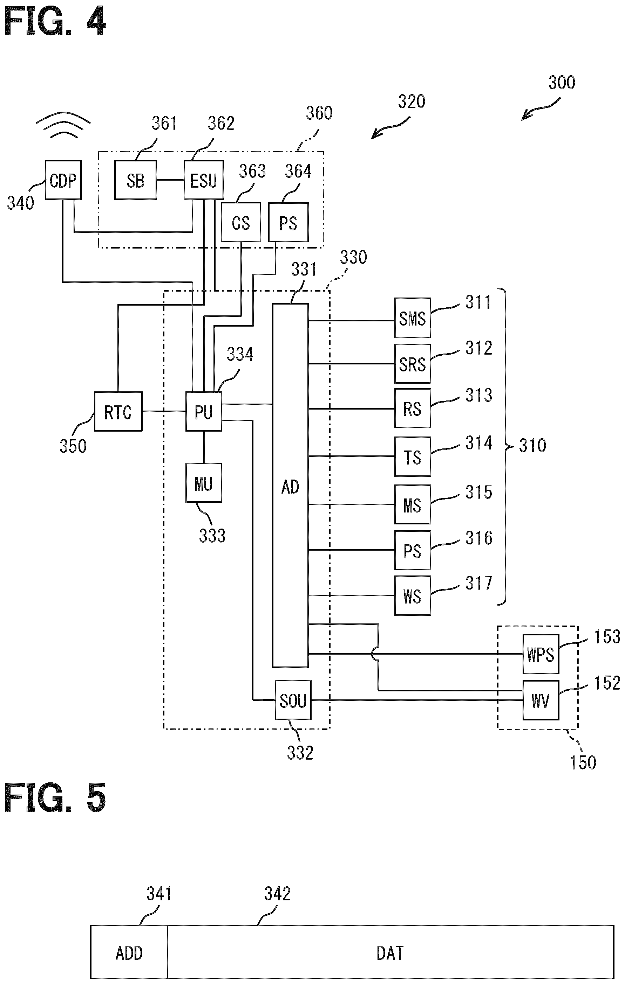

As shown in FIGS. 3 and 4, the monitoring unit 300 includes an environment sensor 310 and a control unit 320. The water supply valve 152 and the water pressure sensor 153 of the pipe module 150 are electrically connected to the control unit 320. In the drawings, the environment sensor 310 is represented as ES, the water supply valve 152 is represented as WV, and the water pressure sensor 153 is represented as WPS.

The multiple environment sensors 310 and the pipe modules 150 are arranged in a matrix in the farm field 20. Each environment sensor 310 detects environment values of a respective one of the multiple divided areas. Each water pressure sensor 153 detects the water pressure in a respective one of the multiple divided areas. The detected environment values and water pressure of each of the multiple divided areas are stored in the information storage unit 500.

As shown in FIG. 4, the control unit 320 includes a microcomputer 330, a communication unit 340, an RTC 350, and a power generation unit 360. RTC is an abbreviation of Real Time Clock. In the drawing, the communication unit 340 is represented as CDP.

The environment values and a water pressure are input to the microcomputer 330. The microcomputer 330 outputs the environment values and the water pressure to the integrated communication device 400 via the communication unit 340. An instruction signal is input to the microcomputer 330 from the integrated communication device 400. The microcomputer 330 outputs a water supply signal to the water supply valve 152 based on the instruction signal. The microcomputer 330 corresponds to a calculation processing unit. The microcomputer 330 is a control device that controls an operation of the water supply valve 152.

The microcomputer 330 has a sleep mode and a normal mode as an operation mode. The sleep mode is a state in which the microcomputer 330 stops the calculation process. The normal mode is a state in which the microcomputer 330 executes the calculation process. Power consumption in the normal mode is larger than that in the sleep mode.

The communication unit 340 performs wireless communication with the integrated communication device 400. The communication unit 340 outputs an electric signal output from the microcomputer 330 as a radio signal to the integrated communication device 400. At the same time, the communication unit 340 receives a radio signal output from the integrated communication device 400 and converts the radio signal into an electric signal. The communication unit 340 outputs the electric signal to the microcomputer 330. When the instruction signal is included in the electric signal, the microcomputer 330 switches from the sleep mode to the normal mode. The microcomputer 330 may be in a wake-up form before receiving the electric signal.

The RTC 350 has a clock function of counting time and a timer function of measuring time. When a preset time point has come, or when a preset time has elapsed, the RTC 350 outputs a wake-up signal to the microcomputer 330. When the wake-up signal is input to the microcomputer 330 in the sleep mode, the microcomputer 330 switches from the sleep mode to the normal mode.

The power generation unit 360 converts light energy acquired by a solar battery into electric energy. The power generation unit 360 functions as a power supply source of the monitoring unit 300. The power is constantly supplied from the power generation unit 360 to the RTC 350. Accordingly, the clock function and the timer function of the RTC 350 are restricted from being damaged. The solar battery may be replaced with a primary cell or a secondary cell.

### <Environment Sensor>

One of the environment values assumed to be different for each divided area of the farm field 20 is soil moisture content. The environment sensor 310 detects an environment value in a corresponding divided area. The environment sensor 310 includes a soil moisture sensor 311 that detects a soil moisture content or the like. The multiple soil moisture sensors 311 detect soil moisture contents in multiple divided areas arranged in the farm field 20. In the drawings, the soil moisture sensor 311 is represented as SMS.

Depending on undulation of the farm field 20 and a growth state of the plant 30, one of environment values assumed to be different for each divided area is an amount of solar radiation. In this description, each environment sensor 310 includes a solar radiation sensor 312 that detects an amount of solar radiation. The multiple solar radiation sensors 312 detect amounts of solar radiation of the multiple divided areas in the farm field 20. In the drawings, the solar radiation sensor 312 is represented as SRS.

On the monitor 700, a soil moisture content distribution and a distribution of amount of insolation in the farm field 20 are displayed as a map by arranging the soil moisture contents and the amounts of solar radiation detected in the multiple divided areas in a matrix. Similarly, a water pressure distribution of the water supply pipes 130 in the farm field 20 is displayed as a map on the monitor 700 by arranging the water pressures detected by the multiple water pressure sensors 153 in a matrix on the monitor 700. The map display process is performed by the integrated calculation unit 600.

The environment values in the farm field 20 include a rainfall amount, a temperature, a humidity, an atmospheric pressure, a carbon dioxide concentration, and an air volume. The sensors that detect the environment values are a rain sensor 313, a temperature sensor 314, a moisture sensor 315, an atmospheric pressure sensor 316, a CO₂ sensor, and a wind sensor 317. At least one environment sensor 310 among the multiple monitoring units 300 includes these sensors.

The environment sensor 310 of the monitoring unit 300 includes various sensors that detect the environment values of the entire farm field 20. FIG. 4 shows an example of the environment sensor 310. In the drawings, the rain sensor 313 is represented as RS, the temperature sensor 314 is represented as TS, the moisture sensor 315 is represented as MS, the atmospheric pressure sensor 316 is represented as PS, and the wind sensor 317 is represented as WS. The wind sensor 317 may detect not only the air volume but also the wind direction. At least one of the rain sensor 313, the temperature sensor 314, the moisture sensor 315, the atmospheric pressure sensor 316, and the wind sensor 317 may be arranged in a matrix in the farm field 20.

The configuration is effective, for example, when the rainfall amount, the temperature, the humidity, the atmospheric pressure, and the air volume greatly change for each divided area because the farm field 20 is wide, the undulation of the farm field 20 is large, or the weather change in the farm field 20 is large. The environment values can be displayed on the monitor 700 in a map by arranging the rainfall amount, the temperature, the humidity, the atmospheric pressure, and the air volume detected by the sensor in a matrix. The output of the sensors is output to the communication unit 340 via the integrated communication device 400. At the same time, the output of the sensors is stored in the information storage unit 500 via the integrated communication device 400.

### <Soil Moisture Content>

Among the various environment values described above, the environment values controlled by the irrigation system 10 include the soil moisture content. The irrigation system 10 controls the supply time point and supply amount of irrigation water for each divided area. In this way, the soil moisture content for each divided area is individually controlled.

The plant 30 has roots in the plow layer of the farm field 20. The growth of the plant 30 depends on an amount of moisture contained in the soil of the plow layer (also referred to as soil moisture content). When the soil moisture content exceeds the depletion of moisture content for normal growth, a disease occurs in the plant 30. When the soil moisture content falls below the permanent wilting point, the plant 30 is not recovered. The depletion of moisture content for normal growth and the permanent wilting point differ depending on the type of the plants 30, and the value thereof is known. The values are stored in the information storage unit 500.

A current value of the soil moisture content is detected by the soil moisture sensor 311. Examples of the physical quantity related to the soil moisture content include soil moisture content tension (pF value) and soil dielectric constant (ε). The soil moisture sensor 311 in this description detects a pF value.

The soil moisture content of the plow layer increases or decreases depending on the environmental change of the farm field 20. When rain falls in the farm field 20, the soil moisture content increases. When water evaporates from the plow layer, the soil moisture content decreases. When the plant 30 absorbs moisture or water penetrates into a layer lower than the plow layer, the soil moisture content decreases. The amount of rain that falls on the plow layer (rainfall amount) is detected by the rain sensor 313. An amount of moisture evaporated from the plow layer (evaporation amount) depends on the amount of solar radiation, the temperature, the humidity, and the air volume. The above environment values are respectively detected by the solar radiation sensor 312, the temperature sensor 314, the moisture sensor 315, and the wind sensor 317.

An amount of moisture absorbed by the plant 30 per unit time can be estimated in advance based on the type of the plants 30. An amount of moisture permeated into a layer lower than the plow layer per unit time can be estimated in advance based on the moisture retention capacity of the soil. The estimated values are stored in the information storage unit 500.

As described above, the environment sensor 310 detects each of the current value of the soil moisture content of the plow layer and a predicted value related to the prediction of an increase and a decrease from the current value of the soil moisture content of the plow layer due to an environmental change. The values are stored as environment values in the information storage unit 500. The information storage unit 500 stores the depletion of moisture content for normal growth and the permanent wilting point of the plant 30, the amount of moisture absorbed by the plant 30 per unit time, and the moisture retention capacity of soil. The above-described instruction from the user (user instruction) is stored in the information storage unit 500. As described above, the information storage unit 500 stores various pieces of information for determining the irrigation schedule. The irrigation system 10 may perform control of confirming a detection value of the soil moisture sensor in real time and stopping irrigation when the detection value reaches a threshold.

### <Microcomputer>

As shown in FIG. 4, the microcomputer 330 includes an acquisition device 331, a signal output unit 332, a memory unit 333, and a processing unit 334. In the drawing, the acquisition device 331 is represented as AD, the signal output unit 332 is represented as SOU, the memory unit 333 is represented as MU, and the processing unit 334 is represented as PU.

The environment values detected by the environment sensor 310 are input to the acquisition device 331. The water pressure detected by the water pressure sensor 153 is input to the acquisition device 331. The acquisition device 331 is electrically connected to each of the environment sensor 310 and the water pressure sensor 153. The wire shown in FIG. 1 is an example of a wire connecting the acquisition device 331 and the soil moisture sensor 311, or a wire connecting the acquisition device 331 and the water pressure sensor 153. A rotation angle of the valve detected by a rotation angle sensor or the like is input to the acquisition device 331.

The signal output unit 332 is electrically connected to the water supply valve 152. The control signal (water supply signal) for controlling the valve opening degree of the water supply valve 152 is output from the signal output unit 332 to the water supply valve 152. When the water supply signal is not input, the water supply valve 152 is in a closed state. When the water supply signal is input, the water supply valve 152 is in an opened state. The water supply valve 152 may maintain a current state when the water supply signal is not input, and may be opened and closed in accordance with the input content when the water supply signal is input. For example, when the control signal is not input, a valve opening degree of the water supply valve 152 is maintained, and the valve opening degree of the water supply valve 152 is adjusted according to the control signal of the opening degree instruction input when the control signal is input.

The memory unit 333 is a non-transitory tangible storage medium that non-temporarily stores programs and data that can be read by a computer or a processor. The memory unit 333 includes a volatile memory and a non-volatile memory. The memory unit 333 stores a program for the processing unit 334 to execute a calculation process. The program includes at least a part of the above-described irrigation application program. The memory unit 333 temporarily stores data when the processing unit 334 executes the calculation process. The memory unit 333 stores various pieces of data input to each of the acquisition device 331 and the communication unit 340 and acquisition time points of various pieces of data.

When receiving the wake-up signal from the RTC 350, the processing unit 334 shifts from the sleep mode to the normal mode. In the normal mode, the processing unit 334 reads the programs and various pieces of data stored in the memory unit 333 to execute the calculation process. The calculation process includes the calculation of a valve opening degree necessary for causing water splashing through the through holes of the distribution tube 136 to reach a desired irrigation position. The processing unit 334 corresponds to a calculation unit. The calculation may be executed by the information processing calculation equipment 610 of the integrated calculation unit 600.

The processing unit 334 reads, from the RTC 350, various sensor signals input to the acquisition device 331 and acquisition time points of the instruction signal input to the communication unit 340. The processing unit 334 stores the instruction signal and the acquisition time point in the memory unit 333. The acquisition time point may be read by causing the integrated communication device 400 to record the data acquisition time point when the integrated communication device 400 wirelessly receives data from each monitoring unit 300. The information storage unit 500 may record data acquisition time point when the information storage unit 500 wirelessly receives data from the integrated communication device 400.

The processing unit 334 stores the environment value and the water pressure respectively input from the environment sensor 310 and the water pressure sensor 153 and the acquisition time points thereof in the information storage unit 500 via the communication unit 340 and the integrated communication device 400. The processing unit 334 outputs a water supply signal to the water supply valve 152 via the signal output unit 332 based on an instruction signal input from the integrated calculation unit 600 via the information storage unit 500, the integrated communication device 400, and the communication unit 340.

### <Communication Unit>

The communication unit 340 converts an electric signal input from the processing unit 334 into a radio signal. The communication unit 340 outputs the radio signal to the integrated communication device 400. The communication unit 340 converts a radio signal output from the integrated communication device 400 into an electric signal. The communication unit 340 outputs the electric signal to the processing unit 334.

The radio signal output by the communication unit 340 includes an address 341 and data 342, which are simply shown in FIG. 5. In the drawing, the address 341 is represented as ADD, and the data 342 is represented as DAT.

As shown in FIG. 3, radio signals are transmitted and received between the multiple communication units 340 and the integrated communication device 400. The address 341 included in the radio signal is an identification code indicating which one of the multiple communication units 340 the radio signal is output from. In other words, the address included in the radio signal is an identification code indicating which one of the multiple processing units 334 the radio signal is output from. A unique address 341 is stored in each of the multiple memory units 333.

The radio signal output from the integrated communication device 400 also includes the address 341. The data 342 in the radio signal includes an instruction signal. A respective one of the multiple communication units 340 receives the radio signal. The radio signal is converted into an electric signal by a respective one of the multiple communication units 340. The electric signal is input to a respective one of the multiple processing units 334. Among the multiple processing units 334, only a processing unit 334 having the same address 341 as the address 341 included in the electric signal executes the calculation process based on the electric signal.

As described later, the microcomputer 330 performs intermittent drive in which the sleep mode and the normal mode are alternately repeated. Therefore, wireless communication between the communication units 340 and the integrated communication device 400 is not frequently performed. A time interval for performing the wireless communication between the communication units 340 and the integrated communication device 400 becomes long. Accordingly, a volume of data capable of being included in the data 342 in one wireless communication can be increased.

### <Power Generation Unit>

The power generation unit 360 includes a solar battery 361, an electricity storage unit 362, a current sensor 363, and a power sensor 364. In the drawing, the solar battery 361 is represented as SB, the electricity storage unit 362 is represented as ESU, the current sensor 363 is represented as CS, and the power sensor 364 is represented as PS. The solar battery 361 converts light energy into electric energy. The electricity storage unit 362 stores the electric energy (power). The power stored in the electricity storage unit 362 is used as drive power for the monitoring unit 300.

The current sensor 363 detects a current output from the solar battery 361 to the electricity storage unit 362. The power sensor 364 detects power output from the electricity storage unit 362. The processing unit 334 stores the detected current value and power value in the information storage unit 500 via the communication unit 340 and the integrated communication device 400. The drive power for the monitoring unit 300 depends on the power generated by the power generation unit 360. Therefore, when an amount of light incident on the power generation unit 360 is small, the drive power of the monitoring unit 300 may be insufficient. To avoid the insufficiency in the drive power, the microcomputer 330 of the monitoring unit 300 performs intermittent drive. The power generation unit 360 may not include the current sensor.

### <RTC>

The RTC 350 outputs a wake-up signal to the microcomputer 330 every time the time interval (drive cycle) of the above-described intermittent drive elapses. Accordingly, the microcomputer 330 alternately repeats the sleep mode and the normal mode. The above-described drive cycle is determined by the integrated calculation unit 600 according to the amount of power stored in the electricity storage unit 362 (amount of stored power). In other words, the intermittent drive interval is determined by the integrated calculation unit 600 according to the amount of stored power.

The integrated calculation unit 600 calculates the amount of stored power based on the power stored in the information storage unit 500. The integrated calculation unit 600 sets the intermittent drive interval to be longer as the amount of stored power is reduced. The integrated calculation unit 600 sets the intermittent drive interval to be shorter as the amount of stored power is increased. The integrated calculation unit 600 causes the intermittent drive interval to be included in an instruction signal. When the processing unit 334 of the microcomputer 330 acquires the instruction signal, the processing unit 334 adjusts the intermittent drive interval. The processing unit 334 adjusts the drive cycle of the RTC 350. It is rare that the environment of the farm field 20 changes extremely in units of several seconds. Therefore, the intermittent drive interval is several tens of seconds to several tens of hours. Accordingly, the time interval for performing the wireless communication is also several tens of seconds to several tens of hours.

### <Drive of Irrigation System>

In the irrigation system 10, signals are transmitted and received between the multiple monitoring units 300 and the integrated calculation unit 600, and various pieces of data are stored in the information storage unit 500. Each of the multiple monitoring units 300 and the integrated calculation unit 600 executes a cycle task to be processed in each drive cycle and an event task to be suddenly processed.

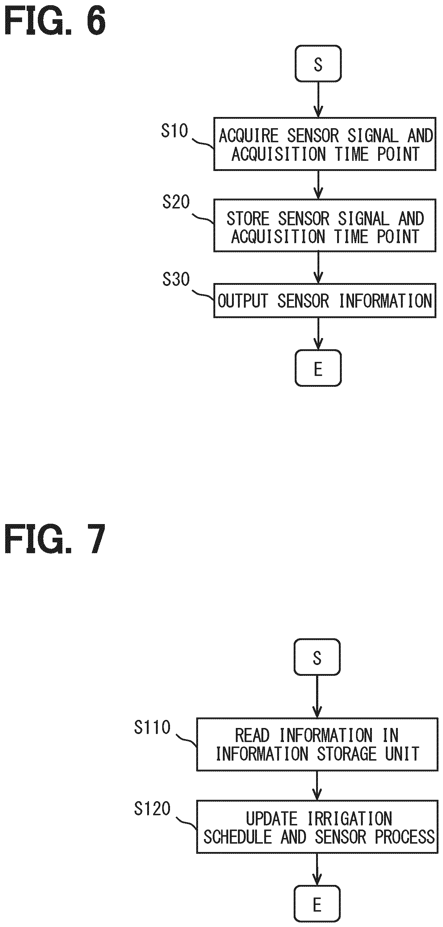

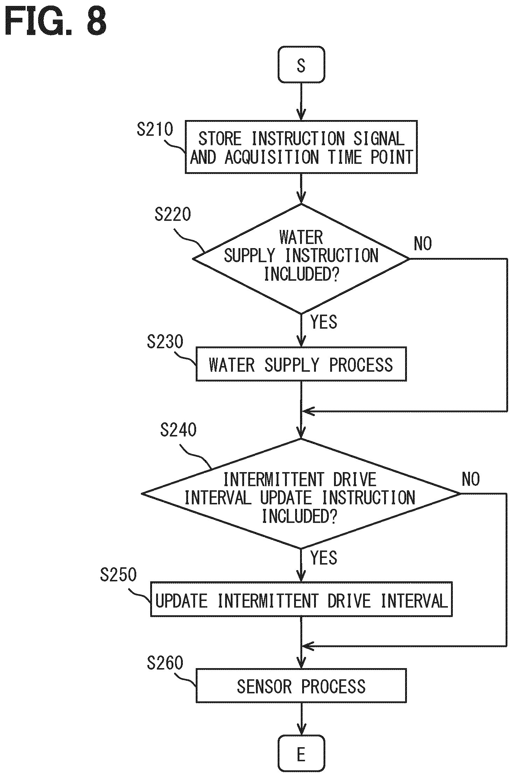

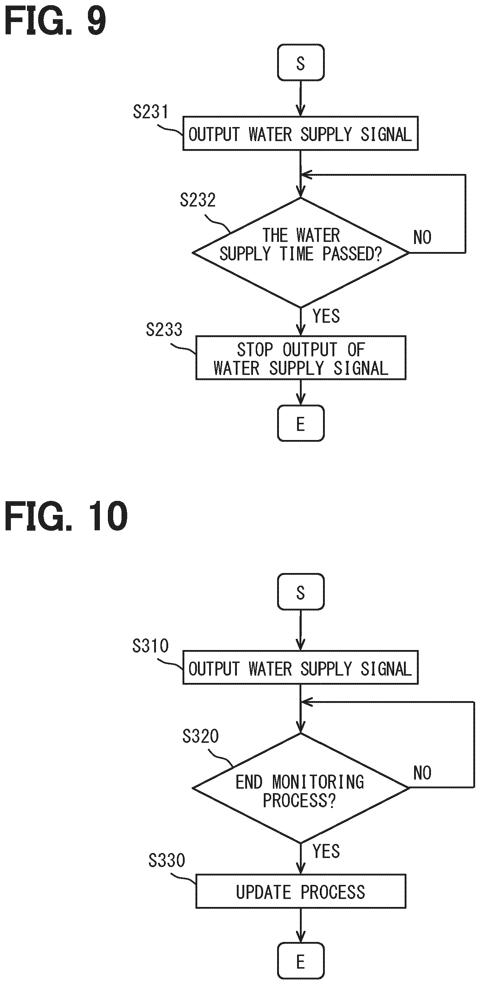

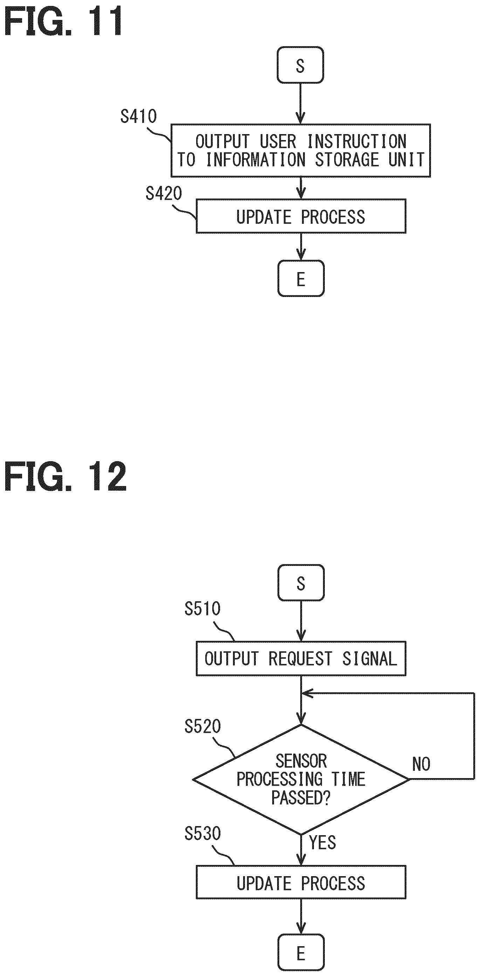

There is a priority order of processes in the cycle task and the event task. When the processing timings of the tasks have been the same, the process of the event task is prioritized over the cycle task. In the cycle task, each monitoring unit 300 executes the sensor process shown in FIG. 6. The integrated calculation unit 600 executes an update process shown in FIG. 7. In the event task, each monitoring unit 300 executes a monitoring process shown in FIG. 8 and a water supply process shown in FIG. 9. The integrated calculation unit 600 executes an irrigation process shown in FIG. 10, a user update process shown in FIG. 11, and a forced update process shown in FIG. 12.

Hereinafter, the sensor process and the update process as the cycle task will be described with reference to FIGS. 6 and 7. In the drawings showing the flowcharts, the start is represented as S, and the end is represented as E.

### <Sensor Process>

Before the start shown in FIG. 6, the microcomputer 330 of the monitoring unit 300 is in the sleep mode, and a wake-up signal is input from the RTC 350 to the microcomputer 330. Accordingly, the microcomputer 330 switches from the sleep mode to the normal mode. At the same time, the microcomputer 330 starts to execute the sensor process shown in FIG. 6. The sensor process is executed at an intermittent drive interval of the microcomputer 330. In step S10, sensor signals input from various sensors are acquired, and acquisition time points of the sensor signals are acquired based on the output of the RTC 350. In step S20, the acquired sensor signals and the acquisition time points are stored. In step S30, the sensor signals and the acquisition time points as sensor information are output from the communication unit 340 to the integrated communication device 400 by wireless communication. The sensor information is stored in the information storage unit 500 by the integrated communication device 400. The microcomputer 330 shifts to the sleep mode and ends the sensor process.

### <Update Process>

The integrated calculation unit 600 executes the update process shown in FIG. 7 every time an update cycle elapses. The update cycle is substantially equal to the intermittent drive interval of the microcomputer 330. In step S110, the various pieces of information stored in the information storage unit 500 are read. In the next step S120, an irrigation schedule of each of the multiple monitoring units 300 is updated based on the read various pieces of information. The integrated calculation unit 600 updates the sensor process in each monitoring unit 300. The integrated calculation unit 600 updates the intermittent drive interval corresponding to the timing of executing the sensor process. The integrated calculation unit 600 owns the updated irrigation schedule and intermittent drive interval, stores the updated irrigation schedule and intermittent drive interval in the information storage unit 500, and ends the update process. As described above, the sensor information, the irrigation schedules, and the intermittent drive interval are updated by the cycle task.

Next, the monitoring process, the water supply process, the irrigation process, the user update process, and the forced update process in the event task will be described with reference to FIGS. 8 to 12. Each of the monitoring process, the water supply process, and the irrigation process is performed in the daytime to avoid depletion of the drive power of the monitoring unit 300. Whether the time is daytime can be detected based on a current time point and the amount of solar radiation detected by the solar radiation sensor 312.

### <Monitoring Process>

Before the start shown in FIG. 8, the microcomputer 330 of each monitoring unit 300 is in the sleep mode. An instruction signal is input to the microcomputer 330 from the integrated calculation unit 600 by wireless communication. As a result, the microcomputer 330 switches from the sleep mode to the normal mode, and starts the monitoring process shown in FIG. 8.

In step S210, the input instruction signal and the acquisition time point thereof are stored. In the next step S220, it is determined whether a water supply instruction to change the water supply valve 152 from the closed state to the opened state is included in the instruction signal. When the water supply instruction is included in the instruction signal, the process proceeds to step S230. When the water supply instruction is not included in the instruction signal, the process proceeds to step S240.

In step S230, the water supply process shown in FIG. 9 is executed. That is, in step S231, the microcomputer 330 outputs a water supply signal to the water supply valve 152 in accordance with the water supply instruction. In step S232, the microcomputer 330 determines whether the water supply time included in the instruction signal has elapsed. When the water supply time has not elapsed, the output of the water supply signal to the water supply valve 152 is continued. When the water supply time has elapsed, the process proceeds to step S233.

In step S233, the output of the water supply signal is stopped to end the water supply process. In the next step S240, it is determined whether an intermittent drive interval update instruction is included in the instruction signal. When the intermittent drive interval update instruction is included in the instruction signal, the process proceeds to step S250. When the intermittent drive interval update instruction is not included in the instruction signal, the process proceeds to step S260. The above-described intermittent drive interval update instruction is periodically or irregularly output as an instruction signal from the integrated calculation unit 600 or the information storage unit 500 to each monitoring unit 300.

In step S250, the processing unit 334 of the microcomputer 330 adjusts a time interval for outputting the wake-up signal of the RTC 350. In the next step S260, the sensor process described with reference to FIG. 6 is executed. When the water supply process in step S230 is executed, an environment value after the supply of irrigation water is detected in step S260. When the water supply process in step S230 has not been executed, an environment value when the irrigation water is not supplied is detected in step S260. The environment value is stored in the information storage unit 500. After the execution of the sensor process, the microcomputer 330 shifts to the sleep mode and ends the monitoring process. The start condition of the monitoring process is not limited to the instruction signal from the integrated calculation unit 600. After the RTC 350 activates the microcomputer 330, the microcomputer 330 performs the process, and then sends sensor data to the integrated calculation unit 600. Then, the integrated calculation unit 600 may send a valve opening degree instruction and the next intermittent drive timing instruction.

### <Irrigation Process>

The integrated calculation unit 600 executes the irrigation process shown in FIG. 10 every time the irrigation water is supplied in the irrigation schedule of each monitoring unit 300. In step S310, the integrated calculation unit 600 outputs a water supply signal including a water supply instruction to the monitoring unit 300 of a divided area to which the irrigation water is to be supplied among the multiple monitoring units 300. In the next step S320, the water supply instruction includes the start of output of the water supply signal and the time of output of the water supply signal (water supply time). The monitoring unit 300 that has received the water supply instruction executes the monitoring process described with reference to FIG. 8.

When the process proceeds to step S320, the integrated calculation unit 600 is in a standby state until the monitoring process performed by the monitoring unit 300 is completed. When the monitoring process has been completed, the process proceeds to step S330. The determination of whether the monitoring process has ended is made based on, for example, whether a time expected to end the monitoring process has elapsed. The determination of whether the monitoring process has ended can be made by inquiring of the monitoring unit 300. A method of determining the end of the monitoring process is not particularly limited. The water supply signal in step S310 may be performed after the sensor process in FIG. 8 is completed and data is transmitted from the microcomputer 330 to the integrated communication device 400 and the information storage unit 500.

### <User Update Process>

The integrated calculation unit 600 executes the user update process shown in FIG. 11 when a user instruction related to the adjustment of the irrigation schedule or the intermittent drive interval is input from the input device 800. In step S410, the integrated calculation unit 600 stores the input user instruction in the information storage unit 500. In the next step S420, the update process described with reference to FIG. 7 is executed. As described above, the irrigation schedule and the intermittent drive interval are updated based on the user instruction.

### <Forced Update Process>

The integrated calculation unit 600 executes the forced update process shown in FIG. 12 when a user instruction related to the update of the irrigation schedule and the intermittent drive interval is input. The integrated calculation unit 600 outputs a request signal including a request instruction for requesting the execution of the sensor process in step S510. The request signal is output to the monitoring unit 300 by wireless communication. In step S520, a standby state is entered until the sensor process performed by the monitoring unit 300 ends.

When the sensor process has ended, the process proceeds to step S530. The determination of whether the sensor process has ended can be made based on, for example, whether a time expected to end the sensor process has elapsed. The determination can be performed by inquiring of the monitoring unit 300 whether the sensor process has ended. A method of determining the end of the sensor process is not particularly limited. In step S530, the update process described with reference to FIG. 7 is executed. As described above, the irrigation schedule and the intermittent drive interval are updated based on various pieces of data when a user requests an update.

### <Individual Irrigation Process>

As described above with reference to FIGS. 6 to 12, the integrated calculation unit 600 determines an irrigation schedule for each of the multiple divided areas. The integrated calculation unit 600 controls the supply of the irrigation water based on each irrigation schedule. Although the irrigation schedule in each divided area is determined by the integrated calculation unit 600, a configuration may be adopted in which the supply of irrigation water based on each irrigation schedule is individually controlled by each monitoring unit 300.

### <Independent Update>

For example, a configuration may be adopted in which the corresponding monitoring unit 300 independently determines an irrigation schedule for each divided area. In such a configuration, each monitoring unit 300 executes the update process shown in FIG. 7.

### <Weather Forecast and Irrigation Schedule>

The information storage unit 500 stores a current value of the soil moisture content, a predicted value of a decrease change in the soil moisture content, and a user instruction. The information storage unit 500 stores the depletion of moisture content for normal growth and the permanent wilting point of the plant 30, the amount of moisture absorbed by the plant 30 per unit time, and the moisture retention capacity of soil. In addition, the information storage unit 500 stores a weather forecast of the farm field 20, which is output from an external information source 1000. In the drawings, the external information source 1000 is represented as ESI.

In S110 of the update process shown in FIG. 7, the integrated calculation unit 600 reads various pieces of information including the weather forecast from the information storage unit 500. In step S120, the integrated calculation unit 600 determines the irrigation schedule to be set in each monitoring unit 300.

### <Target Value and Estimated Value>

The integrated calculation unit 600 calculates a target value and an estimated value of the soil moisture content in order to determine an irrigation schedule. The target value of the soil moisture content is naturally set to a value between the depletion of moisture content for normal growth and the permanent wilting point. In order to attempt to properly grow the plant 30, the target value of the soil moisture content is set to a value away from each of the depletion of moisture content for normal growth and the permanent wilting point, which are theoretical values, by a certain degree.

The integrated calculation unit 600 sets a lower limit target value of the depletion of moisture content for normal growth and an upper limit target value of the permanent wilting point as target values of the soil moisture content. The integrated calculation unit 600 determines the irrigation schedule such that the estimated value of the soil moisture content is between the upper limit target value and the lower limit target value during irrigation periods of the irrigation schedule. Even when the estimated value of the soil moisture content is expected to fall below the lower limit target value due to rainfalls, the integrated calculation unit 600 determines the irrigation schedule such that the estimated value of the soil moisture content does not exceed the depletion of moisture content for normal growth for normal growth.

There is a deviation between the depletion of moisture content for normal growth and the lower limit target value. The lower limit deviation width is determined based on the climate of the farm field 20 in consideration of the sound cultivation of the above-described plants 30. The weather of the farm field 20 includes an expected value of an average rainfall amount of the farm field 20 in the irrigation periods of the irrigation schedule and a total rainfall amount predicted based on a weather forecast in the irrigation periods. The expected value of the average rainfall amount of the farm field 20 during the irrigation periods is stored in the information storage unit 500.

There is a deviation between the permanent wilting point and the upper limit target value. The upper limit deviation width is determined based on an estimated recovery time when a failure occurs in the water supply device 100, a decrement of the soil moisture content per unit time, or the like, in consideration of the sound growth of the plants 30. For example, the upper limit deviation width is determined based on a value obtained by multiplying the recovery time by the decrement of the soil moisture content per unit time. The recovery time is stored in the information storage unit 500.

For example, when a weather forecast for one week is stored in the information storage unit 500 from the external information source 1000, the integrated calculation unit 600 determines an irrigation schedule for one week. In the one week, when there is no rain forecast according to the weather forecast, it is expected that the estimated value of the soil moisture content gradually decreases with time. The decrement per unit time of the estimated value of the soil moisture content is determined based on the predicted value of the change in a decrease of the soil moisture content of the plow layer. Hereinafter, in order to simplify the description, the estimated value of the soil moisture content is simply represented as an estimated value as necessary.

As described above, the irrigation schedule is determined based on the weather forecast and the estimated value of the soil moisture content based on the environment values or the like. Accordingly, it is possible to prevent the soil moisture content in an outdoor divided area from becoming unsuitable for the plant 30 due to a weather change such as rainfall or drying. It is possible to prevent the soil moisture content from falling below the depletion of moisture content for normal growth or exceeding the permanent wilting point.

The integrated calculation unit 600 determines a target water supply amount such that the estimated value of the soil moisture content does not fall below the lower limit target value higher than the depletion of moisture content for normal growth in all the irrigation periods of the irrigation schedule. The integrated calculation unit 600 determines a deviation width (lower limit deviation width) between the depletion of moisture content for normal growth and the lower limit target value based on the weather of the farm field 20 and the like. The weather of the farm field 20 includes an expected value of an average rainfall amount of the farm field 20 in the irrigation periods and a total rainfall amount predicted based on a weather forecast in the irrigation periods. As described above, by setting the lower limit deviation width, the soil moisture content is prevented from reaching the depletion of moisture content for normal growth even if there is rainfall more than the weather forecast after the soil moisture content is brought close to the lower limit target value by the supply of the irrigation water.

The integrated calculation unit 600 determines a target water supply amount such that the estimated value of the soil moisture content in the irrigation schedule does not exceed the upper limit target value lower than the permanent wilting point. The integrated calculation unit 600 determines the deviation width (upper limit deviation width) between the permanent wilting point and the upper limit target value based on the recovery time, the decrement per unit time of the soil moisture content, and the like. As described above, by setting the upper limit deviation width, even if the irrigation water cannot be supplied due to a failure of the water supply valve 152 or the like when the soil moisture content is close to the upper limit target value, the soil moisture content can be prevented from reaching a permanent wilting point before the failure is repaired.

The integrated calculation unit 600 supplies water at a time point when the estimated value of the soil moisture content in the irrigation schedule reaches the lower limit target value. Accordingly, the soil moisture content can be prevented from falling below the lower limit target value. The integrated calculation unit 600 differentiates a rainfall forecast time point from a supply time point of irrigation water. Accordingly, an excessive increase in the soil moisture content can be prevented even if the rainfall amount is larger than that of a rain forecast. The irrigation system 10 may perform control of confirming a detection value of the soil moisture sensor in real time and stopping irrigation when the detection value reaches a threshold. In this case, the calculation of the estimated value of the soil moisture content is unnecessary.

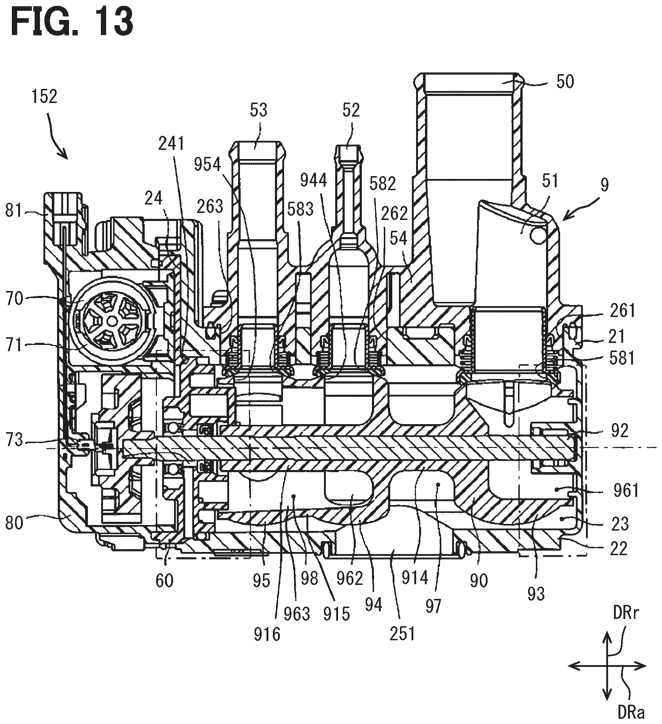

An example of a valve device applicable to the water supply valve 152 will be described below with reference to FIGS. 13 to 15. The valve device is a so-called rotary valve device. The valve device includes one fluid inflow portion and three fluid outflow portions. The pipe on an upstream side is connected to the fluid inflow portion, and the distribution tube 136 is connected to any one of the fluid outflow portions, so that the valve device is mounted on the irrigation system 10. The fluid outflow portion to which the distribution tube 136 is not connected may close the passage by attaching a closing member.

As shown in FIG. 13, the valve device includes a housing 9, a valve 90, a drive unit 70, and a drive unit cover 80. The valve device is configured as a ball valve that opens and closes the valve device by rotating the valve 90 about an axis of a shaft 92. In this description, a direction along an axis of the shaft 92 is referred to as an axial direction DRa, and a direction that is perpendicular to the axial direction DRa and extends radially from the axial direction DRa is referred to as a radial direction DRr.

The housing 9 is an accommodation portion for accommodating the valve 90. The housing 9 is formed of, for example, a resin member. The housing 9 includes a hollow housing body portion 21 in which the valve 90 is accommodated, a pipe member 50 through which coolant flows out of the housing body portion 21, and a partition wall portion 60 attached to the housing body portion 21. The housing body portion 21 has a substantially rectangular parallelepiped appearance and is formed in a bottomed shape having an opening portion on the other side in the axial direction DRa. The housing body portion 21 includes a housing outer wall portion 22 forming an outer peripheral portion of the housing body portion 21. The housing outer wall portion 22 defines a cylindrical valve accommodation space 23 having an axis in the axial direction DRa inside the housing body portion 21.

An inlet port 251 for allowing the supplied water to flow into the valve accommodation space 23 is provided in the housing outer wall portion 22. The inlet port 251 is provided to have a circular opening and is connected to the coupling pipe 135. The inlet port 251 corresponds to a fluid inflow portion.

The pipe member 50 is attached to the housing outer wall portion 22. The housing outer wall portion 22 includes a first outlet port 261, a second outlet port 262, and a third outlet port 263 for allowing the coolant flowing into the valve accommodation space 23 via the inlet port 251 to flow out to the pipe member 50. The first outlet port 261, the second outlet port 262, and the third outlet port 263 correspond to the fluid outflow portion.

A partition wall portion 60 is attached to a housing opening surface 24 of the housing outer wall portion 22. The housing opening surface 24 is placed on the other side in the axial direction DRa in the housing body portion 21. The housing opening surface 24 is provided with a housing opening portion 241 that allows the valve accommodation space 23 to communicate with an outside of the housing body portion 21. The housing opening portion 241 is closed when the partition wall portion 60 is attached to the housing opening surface 24.

The pipe member 50 includes a first pipe portion 51, a second pipe portion 52, and a third pipe portion 53 each formed in a cylindrical shape. The first pipe portion 51, the second pipe portion 52, and the third pipe portion 53 are coupled by a pipe coupling portion 54. The pipe coupling portion 54 is a portion that couples the first pipe portion 51, the second pipe portion 52, and the third pipe portion 53, and attaches the pipe member 50 to the housing outer wall portion 22. An upstream side of the first pipe portion 51 is placed inside the first outlet port 261. An upstream side of the second pipe portion 52 is placed inside the second outlet port 262. An upstream side of the third pipe portion 53 is placed inside the third outlet port 263.

The partition wall portion 60 closes the housing opening portion 241 and holds the valve 90 accommodated in the valve accommodation space 23. The partition wall portion 60 has a disk shape whose plate thickness direction is the axial direction DRa, and is fitted into the housing opening portion 241 from the other side toward one side in the axial direction DRa. When the partition wall portion 60 is fitted into the housing opening portion 241, an outer peripheral portion of the partition wall portion 60 comes into contact with an inner peripheral surface of the housing to close the housing opening portion 241.

The drive unit cover 80 accommodates the drive unit 70. The drive unit cover 80 has a hollow shape made of resin, and a drive unit space for accommodating the drive unit 70 is provided therein. The drive unit cover 80 includes a connector portion 81 for connection to the microcomputer 330. The connector portion 81 connects the valve device to the microcomputer 330, and includes built-in terminals to which the drive unit 70 and a rotation angle sensor 73 are connected.

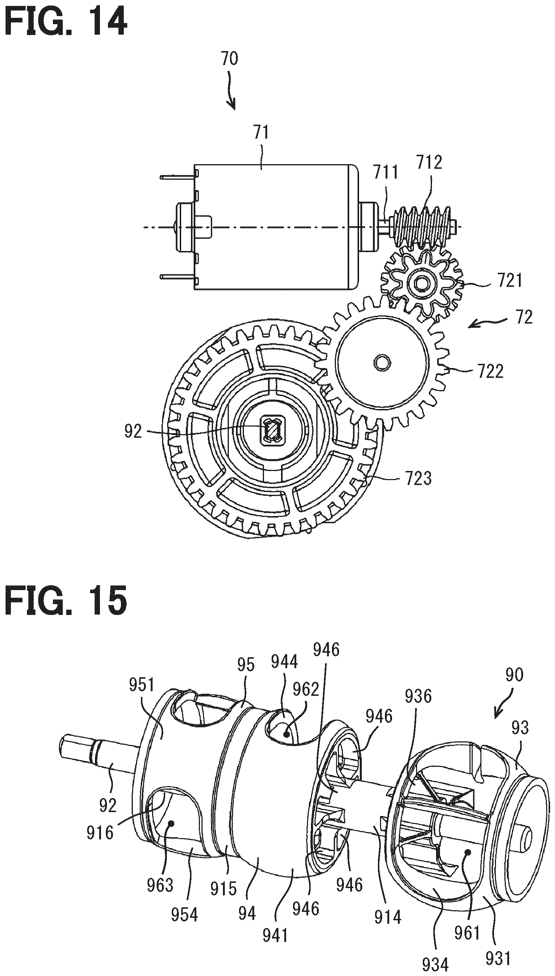

The drive unit 70 includes a motor 71 that outputs a rotational force for rotating the valve 90, a gear portion 72 that transmits an output of the motor 71 to the valve 90, and a rotation angle sensor 73 that detects a rotation angle of the gear portion 72. As shown in FIG. 14, the motor 71 includes a motor body, a motor shaft 711, a worm gear 712, and a motor-side terminal. The motor 71 is configured such that the motor body is capable of outputting motive power when power is supplied to the motor-side terminal. The motor body is formed in a substantially cylindrical shape, and the motor shaft 711 protrudes from an end portion on the other side of the motor body. The motive power output from the motor body is output to the gear portion 72 via the motor shaft 711 and the worm gear 712.

The gear portion 72 is implemented by a speed reduction mechanism having multiple resin gears, and is capable of transmitting motive power, which is output from the worm gear 712, to the shaft 92. The gear portion 72 includes a first gear 721, a second gear 722 that meshes with the first gear 721, and a third gear 723 that meshes with the second gear 722. The shaft 92 is connected to the third gear 723. In the gear portion 72, an outer diameter of the second gear 722 is larger than an outer diameter of the first gear 721, and an outer diameter of the third gear 723 is larger than the outer diameter of the second gear 722.

The first gear 721, the second gear 722, and the third gear 723 are placed such that axes thereof are perpendicular to an axis of the worm gear 712. The third gear 723 is placed such that the axis of the third gear 723 is coaxial with the axis of the shaft 92. The shaft 92 is connected to the third gear 723. The drive unit 70 is configured such that the worm gear 712, the first gear 721, the second gear 722, and the third gear 723 rotate integrally with the valve 90, and the respective rotations are correlated with each other. The gears and the shaft 92 are configured such that the rotation angles of the gears and the shaft 92 are correlated with each other, and a rotation angle of any one of the components correlated with each other can be calculated from rotation angles of the other components.

The rotation angle sensor 73 that detects a rotation angle of the third gear 723 is attached to a portion, facing the third gear 723, of an inner peripheral portion of the drive unit cover 80. The rotation angle sensor 73 is a hall sensor with a built-in hall element and is capable of detecting the rotation angle of the third gear 723 in a non-contact manner. The rotation angle sensor 73 is connected to the microcomputer 330 via the connector portion 81. The detected rotation angle of the third gear 723 is transmitted to the microcomputer 330. The rotation angle of the third gear 723 detected by the rotation angle sensor 73 is input to the acquisition device 331. The processing unit 334 of the microcomputer 330 is capable of calculating a rotation angle of the valve 90 based on the rotation angle of the third gear 723 transmitted from the rotation angle sensor 73.

The shaft 92 and the valve 90 will be described with reference to FIGS. 13 and 15. The shaft 92 is rotatable about the axis by the rotational force output from the drive unit 70. The shaft 92 is connected to the valve 90, and when the shaft 92 rotates, the valve 90 can be rotated integrally with the shaft 92. The shaft 92 is provided in a manner of extending in a columnar shape along the axis, and penetrates from one side to the other side of the valve 90. One side of the shaft 92 in the axial direction DRa is connected to a shaft support portion of the housing body portion 21, and the other side thereof is connected to the gear portion 72. The valve 90 is fixed to an outer peripheral portion of the shaft.

The valve 90 is capable of adjusting, by rotating about the axis, a flow rate of the fluid to be output. The shaft 92 is inserted into the valve 90, and the valve 90 is accommodated in the valve accommodation space 23 in a manner of being rotatable integrally with the shaft 92. The valve 90 has a tubular shape having an axis extending along the axial direction DRa. The valve 90 is formed by connecting a first valve 93, a second valve 94, and a third valve 95 each having a tubular shape, a tubular connection portion 914, and a tubular valve connection portion 915. In the valve 90, the first valve 93, the tubular connection portion 914, the second valve 94, the tubular valve connection portion 915, and the third valve 95 are arranged in this order from one side to the other side in the axial direction DRa. The first valve 93 and the second valve 94 are connected to each other via the tubular connection portion 914. The second valve 94 and the third valve 95 are connected via the tubular valve connection portion 915.

In the valve accommodation space 23, the second valve 94 and the tubular connection portion 914 of the valve 90 face the inlet port 251 in the radial direction DRr. The valve 90 includes a cylindrical shaft connection portion 916 having a center into which the shaft 92 is inserted. The valve 90 is connected to the shaft 92 by inserting the shaft 92 into the shaft connection portion 916. In the valve 90, for example, the first valve 93, the second valve 94, the third valve 95, the tubular connection portion 914, the tubular valve connection portion 915, and the shaft connection portion 916 are integrally molded by injection molding.

The valve 90 is a valve body for causing the coolant flowing into the valve 90 to flow out to the first outlet port 261, the second outlet port 262, and the third outlet port 263. When the valve 90 rotates, the first valve 93 opens and closes the first outlet port 261, the second valve 94 opens and closes the second outlet port 262, and the third valve 95 opens and closes the third outlet port 263.

The axes of the first valve 93, the second valve 94, and the third valve 95 are arranged on the same axis as the axis of the shaft 92. In each of the first valve 93, the second valve 94, and the third valve 95, a central portion in the axial direction DRa bulges outward in the radial direction DRr compared with both end sides. Each of the first valve 93, the second valve 94, and the third valve 95 is configured such that a fluid can flow through an inside thereof.

As shown in FIG. 15, the first valve 93 includes a first valve outer peripheral portion 931 forming an outer peripheral portion, and a first flow path portion 961 is provided inside the first valve outer peripheral portion 931. In the first valve 93, a first inner opening portion 936 through which the fluid flows into the first flow path portion 961 is provided. In the first valve 93, the fluid flowing into the valve accommodation space 23 flows into the first flow path portion 961 via the first inner opening portion 936. The first flow path portion 961 corresponds to a flow path portion in the valve device.

As shown in FIG. 15, the first valve outer peripheral portion 931 is provided with a first outer peripheral opening portion 934 that allows the first flow path portion 961 to communicate with the first outlet port 261 via a first seal opening portion 581 when the shaft 92 rotates. When the first outer peripheral opening portion 934 communicates with the first outlet port 261, the first valve 93 causes the fluid flowing into the first flow path portion 961 to flow out of the first outlet port 261. The first outer peripheral opening portion 934 provided in the first valve outer peripheral portion 931 corresponds to an outer peripheral opening portion provided in the valve outer peripheral portion. The first outer peripheral opening portion 934 is provided in the first valve outer peripheral portion 931 in a manner of extending along a circumferential direction of the axis of the shaft 92. The flow rate of the fluid of the device flowing out of the first valve 93 is adjusted according to an overlapping area between the first outer peripheral opening portion 934 and the first seal opening portion 581 when the shaft 92 rotates. The first inner opening portion 936 functions as a communication path that allows the outside of the first valve 93 to communicate with the first flow path portion 961.

As shown in FIG. 15, the second valve 94 includes a second valve outer peripheral portion 941 forming an outer peripheral portion, and a second flow path portion 962 is provided inside the second valve outer peripheral portion 941. In the second valve 94, a second inner opening portion 946 through which the fluid flows into the second flow path portion 962 is provided on one side in the axial direction DRa. The second valve 94 is configured such that the fluid flowing into the valve accommodation space 23 via the inlet port 251 can flow through the second flow path portion 962 via the second inner opening portion 946. The second flow path portion 962 corresponds to a flow path portion in the valve device.

As shown in FIG. 15, the second valve outer peripheral portion 941 is provided with a second outer peripheral opening portion 944 that allows the second flow path portion 962 to communicate with the second outlet port 262 via a second seal opening portion 582 when the shaft 92 rotates. When the second outer peripheral opening portion 944 communicates with the second outlet port 262, the second valve 94 causes the fluid flowing into the second flow path portion 962 to flow out of the second outlet port 262. The second outer peripheral opening portion 944 provided in the second valve outer peripheral portion 941 corresponds to an outer peripheral opening portion provided in the valve outer peripheral portion.

The second outer peripheral opening portion 944 is provided in a manner of extending in the circumferential direction of the axis of the shaft 92. The flow rate of the fluid flowing out of the second valve 94 to the device is adjusted according to an overlapping area between the second outer peripheral opening portion 944 and the second seal opening portion 582 when the shaft 92 rotates. The second inner opening portion 946 functions as a communication path that allows the outside of the second valve 94 to communicate with the second flow path portion 962. The second inner opening portion 946 faces the first inner opening portion 936. The tubular connection portion 914 is for connecting the first valve 93 and the second valve 94. The tubular connection portion 914 defines a first inter-valve space 97 between an outer peripheral portion of the tubular connection portion 914 and an inner peripheral surface of the housing. The first flow path portion 961 and the second flow path portion 962 communicate with each other via the first inter-valve space 97.

In the second valve 94, the shaft connection portion 916 that covers the outer peripheral portion of the shaft 92 is placed substantially at the center of the inside. In the second valve 94, the tubular valve connection portion 915 is connected to the other side of the second valve outer peripheral portion 941 in the axial direction DRa. The second valve 94 is capable of allowing the fluid flowing into the second flow path portion 962 to flow into the third valve 95 via the tubular valve connection portion 915.

A second inter-valve space 98 is formed inside the tubular valve connection portion 915. The second inter-valve space 98 communicates with the second flow path portion 962 and a third flow path portion 963. An outer diameter of the tubular valve connection portion 915 on one side in the axial direction DRa is the same as an outer diameter of a portion of the second valve 94 on the other side in the axial direction DRa. An outer diameter of the tubular valve connection portion 915 on the other side in the axial direction DRa is the same as an outer diameter of a portion of the third valve 95 on one side in the axial direction DRa. The tubular valve connection portion 915 is formed continuously with the second valve outer peripheral portion 941 and a third valve outer peripheral portion 951.

As shown in FIG. 15, the third valve 95 includes the third valve outer peripheral portion 951 forming an outer peripheral portion of the third valve 95, and the third flow path portion 963 is formed inside the third valve outer peripheral portion 951. One side in the axial direction DRa of the third valve outer peripheral portion 951 of the third valve 95 is connected to the tubular valve connection portion 915. In the third valve 95, the fluid flowing into the second flow path portion 962 flows into the third flow path portion 963 via the second inter-valve space 98. The third flow path portion 963 corresponds to a flow path portion in the valve device.

As shown in FIG. 15, the third valve outer peripheral portion 951 is provided with a third outer peripheral opening portion 954 that allows the third flow path portion 963 to communicate with the third outlet port 263 via the third seal opening portion 583 when the shaft 92 rotates. When the third outer peripheral opening portion 954 communicates with the third outlet port 263, the third valve 95 causes the fluid flowing into the third flow path portion 963 to flow out of the third outlet port 263 to the outside of the device. The third outer peripheral opening portion 954 provided in the third valve outer peripheral portion 951 corresponds to an outer peripheral opening portion provided in the valve outer peripheral portion.

The third outer peripheral opening portion 954 is provided in the third valve outer peripheral portion 951 in a manner of extending along the circumferential direction of the axis. The flow rate of the fluid flowing out of the third valve 95 to the outside of the device is adjusted according to an overlapping area between the third outer peripheral opening portion 954 and the third seal opening portion 583 when the shaft 92 rotates. The shaft connection portion 916 has a tubular shape, and connects the valve 90 and the shaft 92 when the inserted shaft 92 is fixed. When the shaft 92 rotates, the shaft connection portion 916 transmits the rotational force of the shaft 92 to the valve 90 via the shaft connection portion 916. The shaft connection portion 916 is provided in a manner of extending from the second valve 94 to the third valve 95 toward the other side in the axial direction DRa.

An operation of the water supply valve 152 will be described. The microcomputer 330 calculates a rotation angle of the valve 90 for supplying water at a required flow rate for the distribution tube 136, that is, a rotation angle of the motor 71. The microcomputer 330 transmits information on the calculated rotation angle of the motor 71 to the water supply valve 152. At this time, closing members are attached to two fluid outflow portions not connected to the distribution tube 136. The calculation of the rotation angle of the motor 71 may be executed by the information processing calculation equipment 610 of the integrated calculation unit 600.

The water supply valve 152 rotates the motor 71 based on the information on the rotation angle received from the microcomputer 330. The water supply valve 152 rotates the valve 90 via the gear portion 72 and the shaft 92 by rotating the motor 71, and causes the fluid to flow out of the first outer peripheral opening portion 934, the second outer peripheral opening portion 944, and the third outer peripheral opening portion 954 at a required flow rate.

For example, a case where the first outlet port 261 is adopted as the fluid outflow portion communicating with the distribution tube 136 will be described. The water supply valve 152 causes the first outer peripheral opening portion 934 of the first valve 93 to communicate with the first outlet port 261 by rotating the valve 90. The water supply valve 152 adjusts the overlapping area between the first outer peripheral opening portion 934 and the first seal opening portion 581 by adjusting a rotation position of the valve 90. The water supply valve 152 causes the fluid flowing into the valve accommodation space 23 from the inlet port 251 to flow into the first flow path portion 961 via the first inner opening portion 936 and flow out of the first outer peripheral opening portion 934 to the first outlet port 261. The microcomputer 330 controls a water splash distance of the irrigation water and supplies the irrigation water to a required position by controlling a valve opening degree which is the overlapping area between the first outer peripheral opening portion 934 and the first seal opening portion 581.

For example, a case where the second outlet port 262 is adopted as the fluid outflow portion communicating with the distribution tube 136 will be described. The water supply valve 152 causes the second outer peripheral opening portion 944 of the second valve 94 to communicate with the second outlet port 262 by rotating the valve 90. The water supply valve 152 adjusts the overlapping area between the second outer peripheral opening portion 944 and the second seal opening portion 582 by adjusting the rotation position of the valve 90. The water supply valve 152 causes the fluid flowing into the valve accommodation space 23 from the inlet port 251 to flow into the second flow path portion 962 via the second inner opening portion 946 and flow out of the second outer peripheral opening portion 944 to the second outlet port 262. The microcomputer 330 controls a water splash distance of the irrigation water and supplies the irrigation water to a required position by controlling a valve opening degree which is the overlapping area between the second outer peripheral opening portion 944 and the second seal opening portion 582.

For example, a case where the third outlet port 263 is adopted as the fluid outflow portion communicating with the distribution tube 136 will be described. The water supply valve 152 causes the third outer peripheral opening portion 954 of the third valve 95 to communicate with the third outlet port 263 by rotating the valve 90. The water supply valve 152 adjusts the overlapping area between the third outer peripheral opening portion 954 and the third seal opening portion 583 by adjusting the rotation position of the valve 90. The water supply valve 152 causes the fluid flowing into the valve accommodation space 23 from the inlet port 251 to flow into the third flow path portion 963 via the second flow path portion 962 of the second valve 94 and flow out of the third outer peripheral opening portion 954 to the third outlet port 263. The microcomputer 330 controls a water splash distance of the irrigation water and supplies the irrigation water to a required position by controlling a valve opening degree which is the overlapping area between the third outer peripheral opening portion 954 and the third seal opening portion 583. The control of the valve opening degree may be executed by the information processing calculation equipment 610 of the integrated calculation unit 600.

The water supply valve 152 adjusts the rotation angle of the motor 71 by detecting the rotation angle of the third gear 723 by the rotation angle sensor 73 and feeding back information on the detected rotation angle to the microcomputer 330.

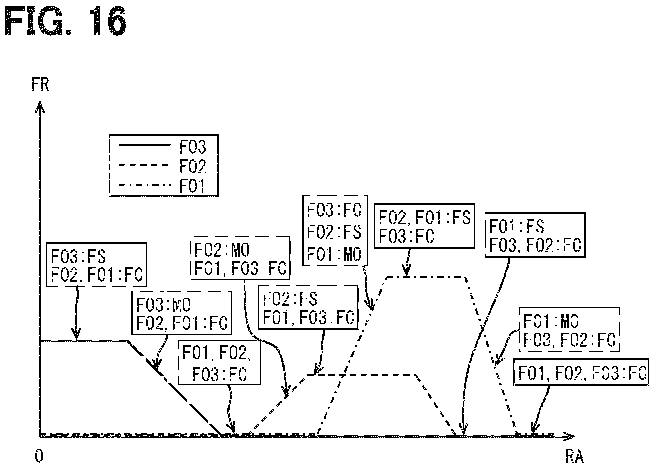

A relationship between a rotation angle of the shaft 92 and a flow rate of the valve device will be described with reference to the graph in FIG. 16. In FIG. 16, the horizontal axis represents a rotation angle RA of the motor 71, and the vertical axis represents a flow rate FR of the fluid flowing out of the valve device. In FIG. 16, FO1 represents the first valve 93, FO2 represents the second valve 94, and FO3 represents the third valve 95. In FIG. 16, FS indicates that the valve opening degree is a fully opened state, FC indicates that the valve opening degree is a fully closed state, and MO indicates that the valve opening degree is an intermediate opening degree. The intermediate opening degree is an opening degree between the fully closed state and the fully opened state. A solid line graph in FIG. 16 shows a relationship between a flow rate of a fluid flowing out of the third valve 95 and a rotation angle. A broken line graph in FIG. 16 shows a relationship between a flow rate of a fluid flowing out of the second valve 94 and a rotation angle. A one-dot chain line graph in FIG. 16 shows a relationship between a flow rate of a fluid flowing out of the first valve 93 and a rotation angle.

As shown in FIG. 16, in a vicinity of the rotation angle of 0 degree, the third valve 95 is in the fully opened state, the other valves are in the fully closed states, and the fluid flows out to the outside of the device only through the third valve 95. When the rotation angle is increased from the state, the third valve 95 shifts to the intermediate opening degree, and when the rotation angle is further increased, all of the three valves are brought into the fully closed state.

When the rotation angle is increased from the fully closed state of all the three valves, only the second valve 94 shifts to the fully opened state via the intermediate opening degree. When the rotation angle is further increased, the first valve 93 shifts to the fully opened state via the intermediate opening degree, and the first valve 93 and the second valve 94 are brought into the fully opened state. When the rotation angle is increased from the state, the second valve 94 shifts to the fully closed state via the intermediate opening degree, and the second valve 94 and the third valve 95 are brought into the fully closed state. When the rotation angle is further increased, the first valve 93 shifts to the fully closed state via the intermediate opening degree, and all the valves are brought into the fully closed state.

As described above, the opening degree of each valve changes according to the rotation angle, and the flow rate of the fluid flowing out of each valve changes. Each water supply valve 152 in the irrigation system 10 supplies the fluid from only one of the three valves, and controls the water splash distance and the water supply amount in the farm field 20 according to the rotation angle.

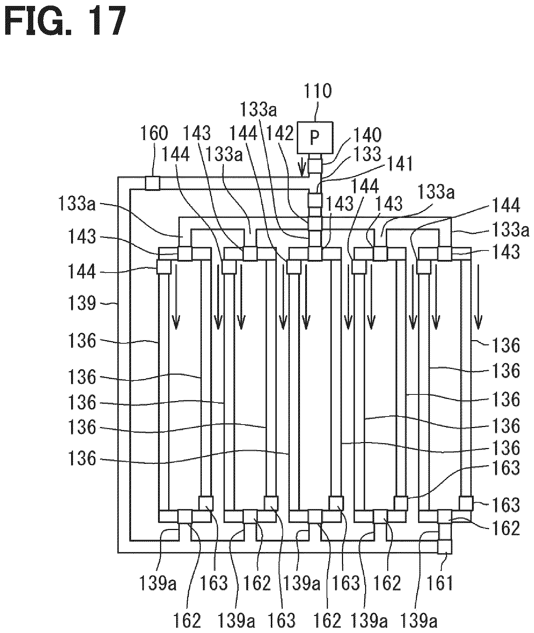

Next, an operation of detecting an abnormal state such as water leakage or clogging during irrigation and restoring the irrigation when the abnormal state occurs will be described with reference to FIGS. 17 to 22. FIG. 17 shows an example of a positional relationship between a passage configuration, a water supply valve, and an abnormality sensor. The irrigation system 10 shown in FIG. 17 includes a first water supply valve and a first abnormality sensor that are provided in a passage on one end portion sides of multiple distribution tubes 136 arranged side by side. Each of the distribution tubes 136 is an irrigation pipe for discharging irrigation water to a corresponding ridge via multiple through holes. The passage on the one end portion side is a passage that allows one end portion of the distribution tube 136 to communicate with the vertical pipe 133 through which the supplied water from the water supply source flows down. The first water supply valve controls the pressure of water flowing down from one end portion of the distribution tube 136 toward the other end portion thereof and supplied from the one end portion side. The first water supply valve includes a water supply valve 141 and multiple water supply valves 143. The first abnormality sensor can detect an abnormal state of water supply from the one end portion side. The first abnormality sensor includes an abnormality sensor 142 and multiple abnormality sensors 144.

The irrigation system 10 shown in FIG. 17 includes a second water supply valve and a second abnormality sensor that are provided in a passage on the other end portion side of multiple distribution tubes 136 arranged side by side. The other end portion of the distribution tube 136 is an end portion located on a side opposite to one end portion of the distribution tube 136. The passage on the other end portion side is a passage that allows the other end portion of the distribution tube 136 to communicate with a branch pipe 139 through which the supplied water from the water supply source flows down. The second water supply valve controls the pressure of water flowing down from the other end portion of the distribution tube 136 toward the one end portion thereof and supplied from the other end portion side. The second water supply valve includes a water supply valve 160 and multiple water supply valves 162. The second abnormality sensor can detect an abnormal state of water supply from the other end portion side. The second abnormality sensor includes an abnormality sensor 161 and multiple abnormality sensors 163.

The vertical pipe 133 is connected to multiple passages leading to one end portion of the multiple distribution tubes 136. The multiple passages include multiple first coupling pipes 133a each branching toward one end portion of each of two adjacent distribution tubes 136. The multiple first coupling pipes 133a are passages that couple the multiple distribution tubes 136 and the vertical pipe 133. Each of the first coupling pipes 133a connects one end portion of each of two adjacent distribution tubes 136 to the water supply pipe 130 through which the supplied water from the water supply source flows down. One first coupling pipe 133a is provided to permit or prohibit flow-down of the supplied water to a predetermined number of distribution tubes 136 forming one group. The number of distribution tubes 136 coupled to one first coupling pipe 133a may be one, or three or more. That is, the predetermined number may be one, or three or more. The irrigation system 10 can simultaneously perform irrigation on multiple groups by controlling the valve opening degrees of the first water supply valve and second water supply valve.

An upstream end portion of the branch pipe 139 is connected to the vertical pipe 133 through which the supplied water from the water supply source flows down. The vertical pipe 133 is provided with a water supply valve 140 that opens and closes a passage upstream of a connection portion of the branch pipe 139. The vertical pipe 133 is provided with a water supply valve 141 that opens and closes a passage closer to one end portion of the distribution tube 136 than a connection portion of the branch pipe 139. The abnormality sensor 142 detects water supply information at a branch portion from the vertical pipe 133 to the multiple first coupling pipes 133a, which is closer to one end portion of the distribution tube 136 than the water supply valve 141. The water supply information detected by the abnormality sensor 142 includes water pressure and flow rate. In the irrigation system 10, a water pressure sensor or a flow rate sensor is capable of being used as the abnormality sensor 142.

Each of the first coupling pipes 133a is provided with the water supply valve 143 that opens and closes a passage of a portion branching to one end portion of each of two distribution tubes 136. The water supply valve 143 has one fluid inflow portion and two fluid outflow portions, and opens and closes a passage branched into two passages. The abnormality sensor 144 detects water supply information in one end portion of one of the two distribution tubes 136 connected to the first coupling pipe 133a. The water supply information detected by the abnormality sensor 144 includes water pressure and flow rate. In the irrigation system 10, a water pressure sensor or a flow rate sensor is capable of being used as the abnormality sensor 144.

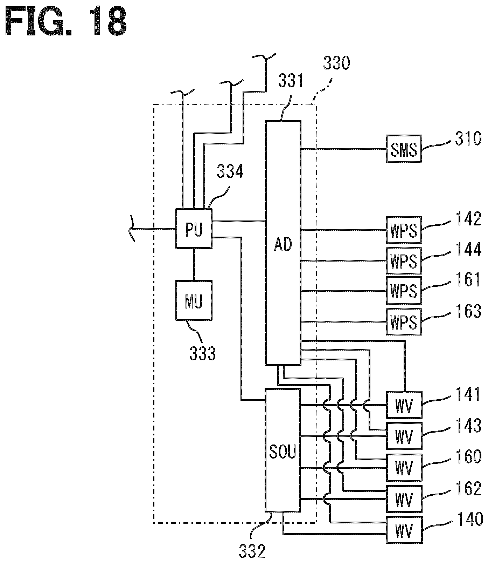

FIG. 18 is a configuration diagram showing a relationship between a control device, the water supply valve, and the abnormality sensor. The water supply information detected by the abnormality sensor 142 and the abnormality sensors 144 is output to the microcomputer 330 of the monitoring unit 300. The processing unit 334 determines whether there is an abnormal state of water supply from one end portion side using the water supply information detected by the abnormality sensor 142 or the abnormality sensors 144. The signal output unit 332 outputs a control signal for controlling the valve opening degree to each of the first water supply valve and the second water supply valve according to whether the water supply from one end portion side is in an abnormal state. The control of the valve opening degree described here may be executed by the information processing calculation equipment 610 of the integrated calculation unit 600.

The branch pipe 139 is connected to multiple passages leading to the other end portion of each of the multiple distribution tubes 136. The multiple passages respectively include multiple second coupling pipes 139a that branch into the other end portion of each of the two adjacent distribution tubes 136. The multiple second coupling pipes 139a are passages that connect the multiple distribution tubes 136 and the branch pipe 139. Each of the second coupling pipes 139a connects the other end portion of each of the two adjacent distribution tubes 136 and the branch pipe 139 through which the supplied water from the water supply source flows down.

The branch pipe 139 is provided with a water supply valve 160 that opens and closes passages of the branch pipe 139. The abnormality sensor 161 detects water supply information at a branch portion from the branch pipe 139 to the multiple second coupling pipes 139a, which is closer to the other end portion of the distribution tube 136 than the water supply valve 160. The water supply information detected by the abnormality sensor 161 includes water pressure and flow rate. In the irrigation system 10, a water pressure sensor or a flow rate sensor is capable of being used as the abnormality sensor 161.

As shown in FIG. 18, the water supply information detected by the abnormality sensor 161 or the abnormality sensors 163 is output to the microcomputer 330 of the monitoring unit 300. The processing unit 334 determines whether water supply from the other end portion side is in an abnormal state by using the water supply information detected by the abnormality sensor 161 or the abnormality sensors 163. The signal output unit 332 outputs a control signal for controlling the valve opening degree to each of the first water supply valve and the second water supply valve according to whether the water supply from the other end portion side is in an abnormal state.

Each of the second coupling pipes 139a is provided with a water supply valve 162 that opens and closes a passage of a portion branching to the other end portion of each of two distribution tubes 136. The water supply valve 162 has one fluid inflow portion and two fluid outflow portions, and opens and closes a passage branched into two passages. The abnormality sensor 163 detects water supply information in the other end portion of one of the two distribution tubes 136 connected to the second coupling pipe 139a. The abnormality sensor 163 detects water supply information in the other end portion of the distribution tube 136 in which the abnormality sensor 144 is not provided. The water supply information detected by the abnormality sensor 163 includes water pressure and flow rate. In the irrigation system 10, a water pressure sensor or a flow rate sensor is capable of being used as the abnormality sensor 163. The processing unit 334 determines whether water supply from the other end portion side is in an abnormal state based on the water supply information detected by the abnormality sensor 161 or the abnormality sensors 163. The signal output unit 332 outputs a control signal for controlling the valve opening degree to each of the first water supply valve and the second water supply valve according to whether the water supply from the other end portion side is in an abnormal state. The first water supply valve and the second water supply valve shown in FIGS. 17 and 18 may be controlled by the microcomputer 330 of the separate monitoring unit 300.

In the state shown in FIG. 17, the water supply valve 140, and the water supply valve 141 and each water supply valve 143 in the first water supply valve are controlled to be in the opened state. The water supply valve 160 and each water supply valve 162 in the second water supply valve are controlled to be in the closed state. With the control, in the multiple distribution tubes 136, the supplied water flows down from one end portion to the other end portion and is discharged from each through hole to irrigate the farm field 20.

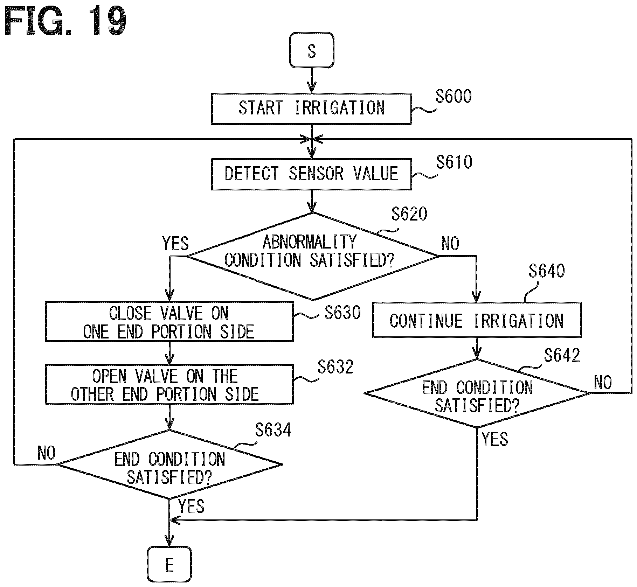

The control process shown in FIG. 19 is executed in the water supply process shown in FIG. 9 or the irrigation process shown in FIG. 10. FIG. 19 is a flowchart showing, as an example of the irrigation, the irrigation in which the supplied water flows down from one end portion of each of the multiple distribution tubes 136 shown in FIG. 17 to the other end portion thereof at the same time. The integrated calculation unit 600 executes a water supply process shown in FIG. 19. The microcomputer 330 of the monitoring unit 300 that has received a water supply signal output from the integrated calculation unit 600 executes the water supply process shown in FIG. 19. In step S600, the integrated calculation unit 600 outputs an irrigation execution instruction to the monitoring unit 300 corresponding to a divided area to be irrigated. The integrated calculation unit 600 outputs a signal indicating irrigation execution to the monitoring unit 300 corresponding to the divided area to be irrigated. The microcomputer 330 of the corresponding monitoring unit 300 outputs a control signal for opening the first water supply valve and closing the second water supply valve. The irrigation from each distribution tube 136 is started by controlling a valve opening degree of the first water supply valve so as to satisfy a target irrigation amount and a target water splash distance. In this state, the pump 110 is driven, and the supplied water from the water supply source flows down through the water supply pipe 130. In step S600, the irrigation in which the supplied water flows down from one end portion of each of the multiple distribution tubes 136 to the other end portion thereof at the same time is performed.

The processes after step S610 are mainly executed by the integrated calculation unit 600 or the microcomputer 330 of each monitoring unit 300. Hereinafter, an example in which the microcomputer 330 mainly executes the processes will be described. When the integrated calculation unit 600 mainly executes the processes, the microcomputer 330 described below is replaced with the integrated calculation unit 600. In step S610, the microcomputer 330 acquires a sensor value from each first abnormality sensor. In step S620, the microcomputer 330 determines whether the sensor value satisfies an abnormality condition. The first abnormality sensor detects a sensor value by which it can be determined that normal irrigation is not performed due to an abnormal state such as water leakage or clogging during irrigation. In the configuration in which the water pressure sensor is used as the first abnormality sensor, it is determined that the abnormality condition is satisfied when an absolute value of a difference between a past pressure value and a sensor value exceeds a threshold. The past pressure value is a water pressure value detected during normal irrigation in the past, and is stored in the memory unit 333. When the integrated calculation unit 600 executes the process, the detected water pressure value is stored in the information storage unit 500. When a difference between the past pressure value and the sensor value is a positive value and exceeds the threshold, for example, an abnormal state in which water leakage from the passage occurs is capable of being assumed. When a difference between the past pressure value and the sensor value is a negative value and an absolute value exceeds the threshold, for example, an abnormal state in which clogging occurs in the passage is capable of being assumed.

In the configuration in which the flow rate sensor is used as the first abnormality sensor, it is determined that the abnormality condition is satisfied when an absolute value of a difference between a past flow rate value and a sensor value exceeds a threshold. The past flow rate value is a flow rate value detected during normal irrigation in the past, and is stored in the memory unit 333. When the integrated calculation unit 600 executes the process, the detected flow rate value is stored in the information storage unit 500. When the difference between the past flow rate value and the sensor value is a positive value and exceeds the threshold, for example, an abnormal state in which clogging occurs in the passage is capable of being assumed. An abnormal state in which water leakage from the passage occurs is determined, for example, when the difference between the past flow rate value and the sensor value is a negative value and the absolute value exceeds the threshold.

When it is determined in step S620 that the state is not abnormal, a process of continuing the irrigation is executed in step S640. The irrigation is continued until the irrigation end condition is satisfied in step S642. The irrigation end condition is satisfied, for example, when the irrigation flow rate from the start of irrigation reaches the target irrigation amount. The irrigation end condition is satisfied, for example, when the irrigation time from the start of irrigation reaches the target irrigation time. When determining in step S642 that the irrigation end condition is satisfied, the microcomputer 330 controls the first water supply valve to be in the fully closed state to end the irrigation by the water supply from one end portion to the other end portion.

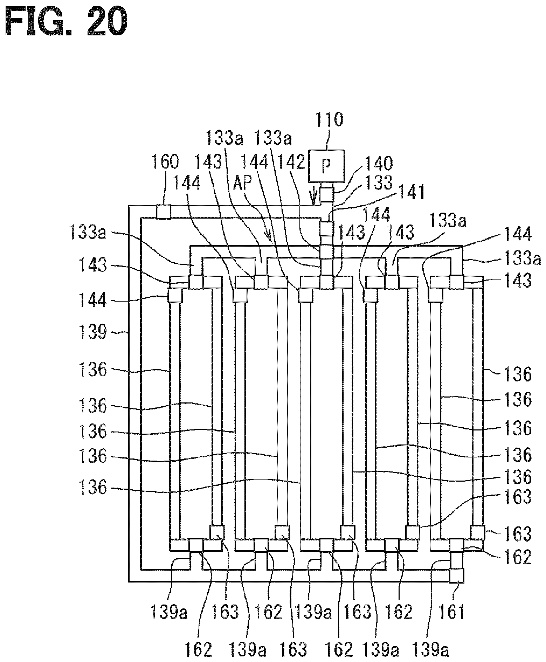

FIG. 20 shows an example of a portion where an abnormality has been detected. When an abnormal state occurs in a portion viewed from the arrow AP shown in FIG. 20, normal irrigation from the distribution tubes 136 cannot be performed even when the water supply valve 143 is maintained in the opened state. In this case, for example, it is assumed that the sensor value of the abnormality sensor 144 indicates the abnormal state. When water leakage occurs, the sensor value indicates an abnormal value because the abnormality sensor 144 detects that the supplied water does not reach the passage or only a small amount of supplied water flows down. When clogging occurs, the sensor value indicates an abnormal value because the abnormality sensor 144 detects that the supplied water does not reach the passage or only a small amount of supplied water flows down.

When it is determined in step S620 that the passage on one end portion side is in an abnormal state, the valve opening degree of the first water supply valve is controlled in step S630 to change the first water supply valve from the opened state to the closed state. Specifically, the water supply valve 141 and the water supply valve 143 are changed from the opened state to the closed state. With this process, the valve on the one end portion side is closed, and the abnormal state can be stopped. In step S632, the microcomputer 330 further controls a valve opening degree of the second water supply valve to change the second water supply valve from the closed state to the opened state. Specifically, the water supply valve 160 and the water supply valve 162 are changed from the closed state to the opened state. At this time, the valve opening degree of the second water supply valve is controlled so that the water supplied from the other end portion satisfies the same target irrigation amount and the same target water splash distance as the water supply from the one end portion.

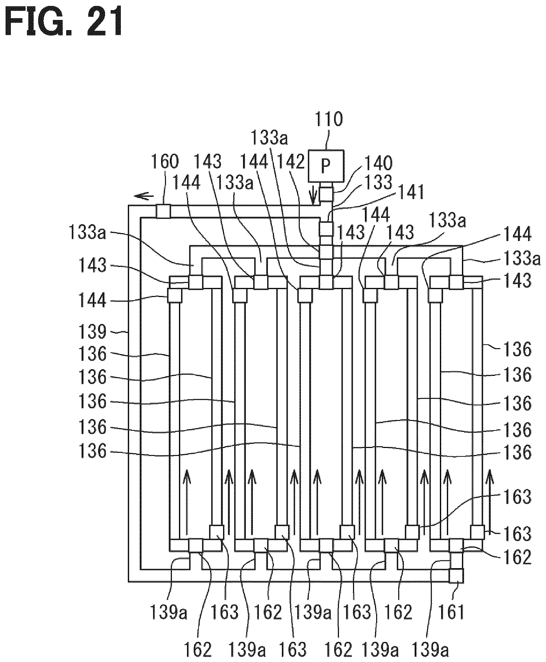

With the processes in steps S630 and S632, the water supplied from the water supply source flows down from the other end portion of each of the distribution tubes 136 to the one end portion thereof via the branch pipe 139 and the second coupling pipes 139a. In this way, the irrigation from the multiple distribution tubes 136 is changed to water supply from the other end portion to the one end portion instead of water supply from the one end portion to the other end portion, and normal irrigation continues. The water supply from the other end portion to the one end portion shown in FIG. 21 continues until the irrigation end condition is satisfied in step S634. The irrigation end condition is the same as that in step S642. When the microcomputer 330 determines in step S634 that the irrigation end condition is satisfied, the microcomputer 330 controls the second water supply valve to be in the fully closed state to end the irrigation by the water supply from the other end portion to the one end portion.

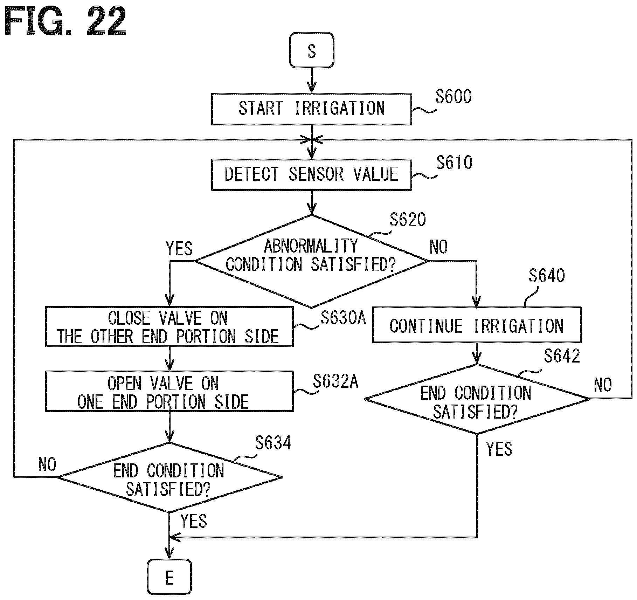

FIG. 22 is a flowchart showing irrigation in which supplied water flows down from one end portion of each of the multiple distribution tubes 136 to the other end portion thereof at the same time, unlike FIG. 19. The flowchart in FIG. 22 differs from the flowchart in FIG. 19 in steps S630A and S632A. The processes shown in FIG. 22 are mainly executed by the integrated calculation unit 600 or the microcomputer 330 of each monitoring unit 300. When the integrated calculation unit 600 mainly executes the processes, the microcomputer 330 described below is replaced with the integrated calculation unit 600. In step S600 of FIG. 19, the microcomputer 330 outputs a control signal for closing the first water supply valve and opening the first water supply valve. The irrigation from each distribution tube 136 is started by controlling a valve opening degree of the second water supply valve so as to satisfy a target irrigation amount and a target water splash distance. In step S600 of FIG. 22, the irrigation in which the supplied water flows down from the other end portion of each of the multiple distribution tubes 136 to the one end portion thereof at the same time is performed.

When it is determined in step S620 that the passage on the other end portion side is in an abnormal state, the valve opening degree of the second water supply valve is controlled in step S630A to change the second water supply valve from the opened state to the closed state. Specifically, the water supply valve 160 and the water supply valve 162 are changed from the opened state to the closed state. With this process, the valve on the other end portion side is closed, and the abnormal state can be stopped. In step S632A, the microcomputer 330 further controls a valve opening degree of the first water supply valve to change the first water supply valve from the closed state to the opened state. Specifically, the water supply valve 141 and the water supply valve 143 are changed from the closed state to the opened state. At this time, the valve opening degree of the first water supply valve is controlled so that the water supplied from the one end portion satisfies the same target irrigation amount and the same target water splash distance as the water supply from the other end portion.

With the processes in steps S630A and S632A, the water supplied from the water supply source flows down from one end portion of each of the distribution tubes 136 to the other end portion thereof via the vertical pipe 133 and the first coupling pipe 133a. In this way, the irrigation from the multiple distribution tubes 136 is changed to water supply from the one end portion to the other end portion instead of water supply from the other end portion to the one end portion, and normal irrigation continues. The water supply from the one end portion to the other end portion continues until the irrigation end condition is satisfied in step S634. When the irrigation end condition is satisfied in step S634, the microcomputer 330 controls the first water supply valve to be in the fully closed state, and ends the irrigation by the water supply from one end portion to the other end portion.

The irrigation system 10 may simultaneously perform irrigation by some of the multiple groups by controlling the valve opening degree of the first water supply valve and the second water supply valve. The irrigation system may perform water supply from one end portion by some of the multiple groups, and perform water supply from the other end portion by the other groups. For some groups, any one group or two or more groups can be selected from among the multiple groups.

In the irrigation system 10, a soil moisture sensor that detects an amount of moisture in the soil in which the distribution tube 136 is placed is capable of being used as the abnormality sensor. When the soil moisture sensor is adopted, the microcomputer 330 determines that the abnormality condition is satisfied if an absolute value of a difference between a past soil moisture content and a sensor value from the soil moisture sensor exceeds a threshold. The past soil moisture content is a flow rate of water contained in a soil portion, which is detected when normal irrigation was performed in the past, and is stored in the memory unit 333. When the difference obtained by subtracting the sensor value from the past soil moisture content is a positive value and exceeds the threshold, for example, an abnormal state in which clogging occurs in the passage is capable of being assumed. Due to the occurrence of clogging, water is not discharged from the through holes of the distribution tube 136 or is discharged in a small amount, and therefore, a state in which the soil moisture content is lower than that during normal irrigation is capable of being assumed. When the difference obtained by subtracting the sensor value from the past pressure value is a negative value and the absolute value exceeds the threshold, for example, an abnormal state in which water leakage from the passage occurs is capable of being assumed. The abnormal state is capable of being assumed to be, for example, a state in which water leakage occurs from a specific portion of the distribution tube 136 and the soil moisture content at the water leakage portion is higher than that during normal irrigation.

The irrigation system 10 according to the first embodiment includes the distribution tubes 136, a first water supply valve, a second water supply valve, a first abnormality sensor, a second abnormality sensor, and a control device. The first water supply valve controls a pressure of water flowing down from one end portion of the distribution tube toward the other end portion thereof and supplied from the one end portion side to control an amount of irrigation water from a through hole of the distribution tube. The second water supply valve controls a pressure of water flowing down from the other end portion of the distribution tube toward the one end portion of the distribution tube and supplied from the other end portion side to control the amount of irrigation water from the through hole of the distribution tube. The first abnormality sensor detects an abnormal state of water supply from one end portion side of the distribution tube. The second abnormality sensor detects an abnormal state of water supply from the other end portion side of the distribution tube. The control device controls a valve opening degree of the first water supply valve and the second water supply valve when an abnormal state is detected by the first abnormality sensor or the second abnormality sensor. The control device closes a water supply valve configured to control a pressure of water supplied from a side where an abnormal state is detected, and opens a water supply valve configured to control a pressure of water supplied from a side where an abnormal state is not detected. According to the irrigation system 10, instead of stopping water supply from a side, where an abnormal state is detected, to eliminate the failure, it is possible to restore to the appropriate irrigation by performing the water supply from an opposite side. The irrigation system 10 is capable of performing irrigation with reduced adverse effects when a failure occurs during irrigation. When the abnormality such as the water leakage occurs, the concern of the wetting damage due to the concentrated water leakage from the water leakage portion can be eliminated and a normal irrigation amount can be provided to an initial target range.

The control device continues irrigation until a target irrigation amount or a target irrigation time is reached after opening the water supply valve configured to control the pressure of the water supplied from the side where the abnormal state is not detected. According to the above configuration, it is possible to provide a system that stops the irrigation in which the abnormal state is detected to eliminate the failure and immediately performs the irrigation as a substitute to ensure an originally scheduled irrigation amount.

The first water supply valve includes multiple water supply valves each individually controlling a pressure of supplied water flowing down to a predetermined number of distribution tubes 136. The second water supply valve includes multiple water supply valves each individually controlling a pressure of supplied water flowing down to a predetermined number of distribution tubes 136. The control device individually controls a valve opening degree for each of the water supply valves provided in the first water supply valve, and individually controls a valve opening degree for each of the water supply valves provided in the second water supply valve. Accordingly, the control device controls a pressure of supplied water for each of the predetermined number of distribution tubes corresponding to a portion where an abnormal state is detected. According to the above configuration, it is possible to eliminate the abnormal state and perform the alternative irrigation for each of the predetermined number of distribution tubes corresponding to the portion where the abnormal state occurs, among the multiple distribution tubes provided in the system.

A calculation unit of the control device detects occurrence of an abnormal state in water supply from any side based on a sensor value detected by the first abnormality sensor or the second abnormality sensor. An output unit of the control device outputs a control signal for controlling a valve opening degree of the first water supply valve and the second water supply valve when the occurrence of the abnormal state has been detected. The output unit outputs a control signal for closing one of the first water supply valve and the second water supply valve, which controls water supply from a side where an abnormal state is detected, and for opening another one of the first water supply valve and the second water supply valve, which controls water supply from a side where an abnormal state is not detected. The control device is capable of performing the irrigation with reduced adverse effects when a failure occurs during irrigation. When the abnormality such as the water leakage occurs, the control device is capable of eliminating the concern of the wetting damage due to the concentrated water leakage from the water leakage portion and providing a normal irrigation amount to an initial target range.

The calculation unit determines whether a target irrigation amount or a target irrigation time has been reached after the water supply valve that controls the pressure of the water supplied from the side where the abnormal state is not detected is opened. The output unit continues to output the control signal until the calculation unit has determined that the target irrigation amount or the target irrigation time has been reached. Alternatively, the output unit outputs an irrigation end control signal at a timing when it is determined that the irrigation time has been reached. According to the control, it is possible to eliminate the failure by stopping the irrigation in which the abnormal state is detected and to ensure an originally scheduled irrigation amount by immediately performing the irrigation as a substitute.

<Second Embodiment>

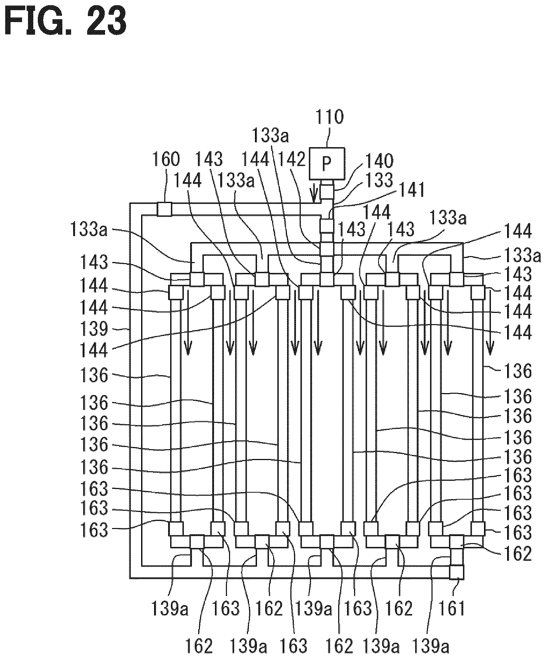

A second embodiment will be described with reference to FIG. 23. The irrigation system 10 according to the second embodiment has a configuration shown in FIG. 23 for a positional relationship between a water supply valve and an abnormality sensor. Configurations, operations, and effects that are not particularly described in the second embodiment are the same as those of the above-described embodiment, and different points will be described below.

FIG. 23 shows the first water supply valve, the second water supply valve, the first abnormality sensor, and the second abnormality sensor. The configuration shown in FIG. 23 is different from the configuration shown in FIG. 17 in a configuration of the first abnormality sensor and a configuration of the second abnormality sensor. The abnormality sensors 144 provided in the first abnormality sensor shown in FIG. 23 are provided to detect water supply information in one end portion of each of all the distribution tubes 136. The abnormality sensors 163 provided in the second abnormality sensor shown in FIG. 23 are provided to detect the water supply information in the other end portion of each of all the distribution tubes 136. According to the configuration, the first abnormality sensor and the second abnormality sensor are respectively provided at both end portions of all the distribution tubes, and therefore, a more accurate position of the abnormal portion can be detected.

### <Third Embodiment>

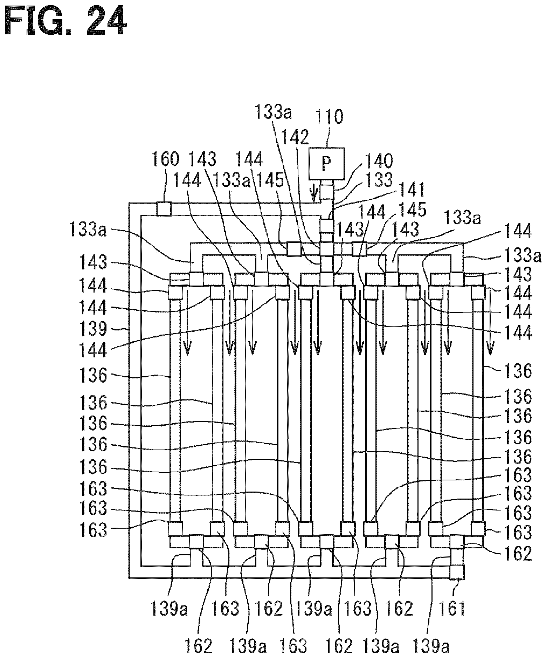

A third embodiment will be described with reference to FIGS. 24 to 26. The irrigation system 10 according to the third embodiment has a configuration shown in FIG. 24 for a positional relationship between a water supply valve and an abnormality sensor. Configurations, operations, and effects that are not particularly described in the third embodiment are the same as those of the above-described embodiment, and different points will be described below.

FIG. 24 shows the first water supply valve, the second water supply valve, the first abnormality sensor, and the second abnormality sensor. The configuration shown in FIG. 24 is different from the configuration shown in FIG. 23 in the configuration of the first water supply valve. The first water supply valve shown in FIG. 24 includes water supply valves 145. The water supply valves 145 are respectively provided at two positions of passages branched from the vertical pipe 133. Each water supply valve 145 is provided in a passage located between a branch portion branching from the vertical pipe 133 to the multiple first coupling pipes 133a and a branch portion to two first coupling pipes 133a. Each water supply valve 145 is provided to permit and block the flow-down of water to two groups each including a predetermined number of distribution tubes 136.

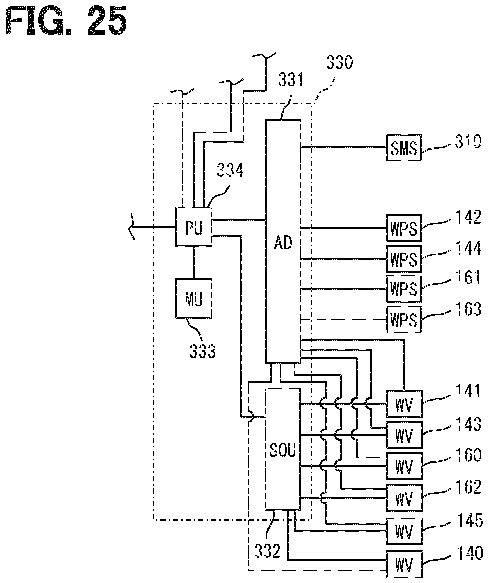

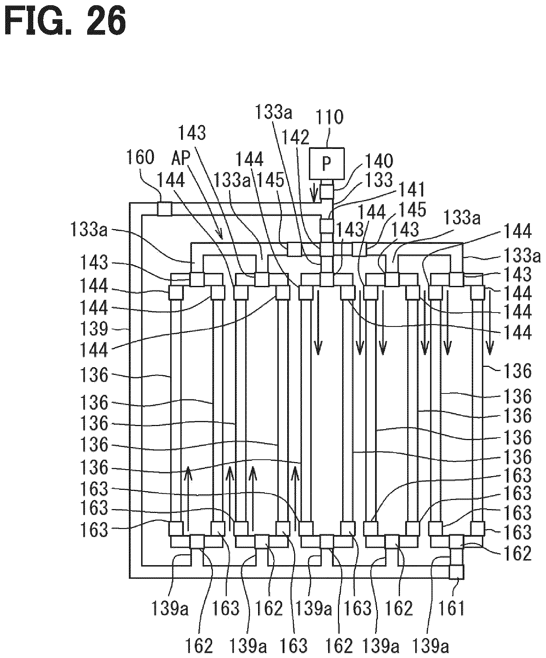

FIG. 25 is a configuration diagram showing a relationship between the control device, the water supply valve, and the abnormality sensor. When an abnormal state occurs, the signal output unit 332 outputs a control signal for controlling a valve opening degree of the water supply valve 145 in order to prohibit flow-down of the supplied water to the two groups described above. The first water supply valve and the second water supply valve shown in FIG. 25 may be controlled by the microcomputers 330 of the separate monitoring units 300. FIG. 26 shows an example of a portion where an abnormality has been detected. When an abnormal state occurs in a portion viewed from the arrow AP shown in FIG. 26, even if the upstream water supply valve 145 is maintained in the opened state, normal irrigation cannot be performed from the distribution tubes provided in the two groups. For example, when water leakage occurs, supplied water does not reach the distribution tubes provided in the two groups or only a small amount of supplied water flows down. In order to stop the abnormal state, the microcomputer 330 performs control to close the upstream water supply valve 145 and the water supply valves 143 corresponding to the two groups. The microcomputer 330 performs control to open the water supply valve 160 and the water supply valves 162 located on the other end portion sides of the distribution tubes corresponding to the two groups. With the control, it is possible to switch the two groups to the irrigation in which the supplied water flows down from the other end portion of each of the distribution tubes to the one end portion of each of the distribution tubes.

According to the irrigation system 10 of the third embodiment, a more detailed fail-safe control can be performed. For example, when there is a difference in height in the farm field 20 and one of the water supply valves is higher, a control without fail-safe can also be performed on portions other than the abnormal portion because it is desired to perform irrigation from a high portion of the distribution tube.

### <Fourth Embodiment>

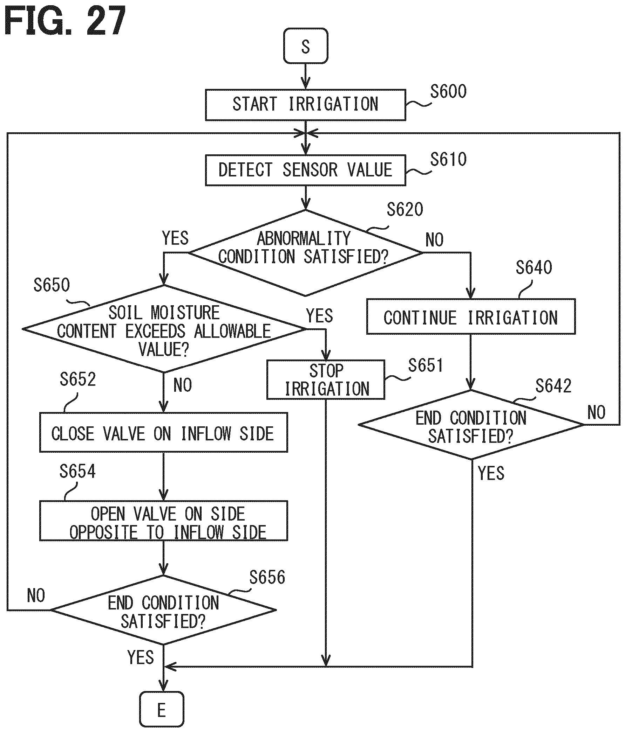

A fourth embodiment will be described with reference to FIG. 27. The irrigation system 10 according to the fourth embodiment is different from the other embodiments in that the control of the water supply valve is performed using the sensor value of the soil moisture sensor when an abnormal state is detected. Configurations, operations, and effects not particularly described in the fourth embodiment are the same as those in the first to third embodiments, and different points will be described below.

FIG. 27 is a flowchart showing an operation of a water supply valve according to a fourth embodiment when an abnormality is detected. The control process shown in FIG. 27 is executed in the water supply process shown in FIG. 9 or the irrigation process shown in FIG. 10. The integrated calculation unit 600 and the microcomputer 330 of the monitoring unit 300 that has received the water supply signal output from the integrated calculation unit 600 execute the water supply process shown in FIG. 27. The processes shown in FIG. 27 are mainly executed by the integrated calculation unit 600 or the microcomputer 330 of each monitoring unit 300. When the integrated calculation unit 600 mainly executes the processes, the microcomputer 330 described below is replaced with the integrated calculation unit 600. In step S600, the microcomputer 330 controls the first water supply valve and the second water supply valve to perform either water supply from one end portion to the other end portion or water supply from the other end portion to one end portion. In step S610, the microcomputer 330 acquires a sensor value of an abnormality sensor corresponding to a side where the supplied water flows into the distribution tube 136. For example, when the water supply from one end portion to the other end portion is performed, a sensor value of each first abnormality sensor is acquired. In step S620, the microcomputer 330 determines whether the sensor value of the abnormality sensor corresponding to the side where the water flows in satisfies the abnormality condition.

When it is determined in step S620 that an abnormal state has occurred in a passage on the inflow side, it is determined in step S650 whether the content of moisture in the soil to be irrigated exceeds an allowable value. The allowable value is set to a value such that the soil contains an excessive amount of moisture to such an extent that the growth of crops is adversely affected when the allowable value is exceeded. The allowable value is stored in the memory unit 333 in advance. The case where the soil moisture content exceeds the allowable value can be assumed to be, for example, an abnormal state in which water leakage occurs and the leaked water excessively increases the soil moisture content. When it is determined in step S650 that the soil moisture content exceeds the allowable value, the microcomputer 330 executes a process of stopping the irrigation by closing the water supply valve in step S651. The reason for stopping the irrigation is to avoid adverse effects on crop growth due to excessive soil moisture content and continued irrigation.

When it is determined in step S650 that the soil moisture content is equal to or less than the allowable value, the water supply valve provided in the passage on the inflow side is changed from the opened state to the closed state. When the soil moisture content is equal to or less than the allowable value, it can be assumed that the soil is not in a wet state but in a dry state. In this state, it is determined that the risk of adverse effects on the crop is low even if the direction of the water supply to the distribution tube is changed and the irrigation is continued. In step S654, the microcomputer 330 further changes a water supply valve, provided in a passage opposite to the inflow side, from the closed state to the opened state. With the control, the flow direction of the supplied water in the distribution tube 136 is changed to a reverse direction, and the normal irrigation by the water supply via the passage which is not in the abnormal state can be continued. The changed water supply is continued until the irrigation end condition is satisfied in step S656. When the microcomputer 330 determines in step S656 that the irrigation end condition is satisfied, the microcomputer 330 controls the water supply valve to the fully closed state to end the irrigation performed by the changed water supply.

When an abnormal state has been detected by the first abnormality sensor or the second abnormality sensor, the control device closes the water supply valve based on the moisture content information detected by the soil moisture sensor 311. The irrigation system 10 stops the irrigation by the control. When an abnormal state has been detected by the first abnormality sensor or the second abnormality sensor, the calculation unit determines whether to stop the irrigation based on the moisture content information detected by the soil moisture sensor. When the calculation unit has determined to stop the irrigation, the output unit outputs a control signal for closing the water supply valve. According to the control, when the soil contains excess moisture due to the occurrence of an abnormal state such as water leakage, adverse effects on crop growth can be avoided, and unnecessary irrigation can be prevented.

When the abnormal state is detected, the control device closes, based on the detected moisture content information, the water supply valve that controls the pressure of the water supplied from the side where the abnormal state has been detected. The control device continues the irrigation by further opening the water supply valve that controls the pressure of the water supplied from the side where the abnormal state is not detected. When an abnormal state has been detected by the first abnormality sensor or the second abnormality sensor, the calculation unit determines whether to continue the irrigation based on the moisture content information detected by the soil moisture sensor. When the calculation unit has determined to continue the irrigation, the output unit outputs a control signal for closing the water supply valve that controls the pressure of the water supplied from the side where the abnormal state has been detected and for opening the water supply valve that controls the pressure of the water supplied from the side where the abnormal state is not detected. According to the control, it is possible to appropriately provide the irrigation amount when the soil moisture amount indicates the need for irrigation, which is useful for growing crops.

### <Fifth Embodiment>

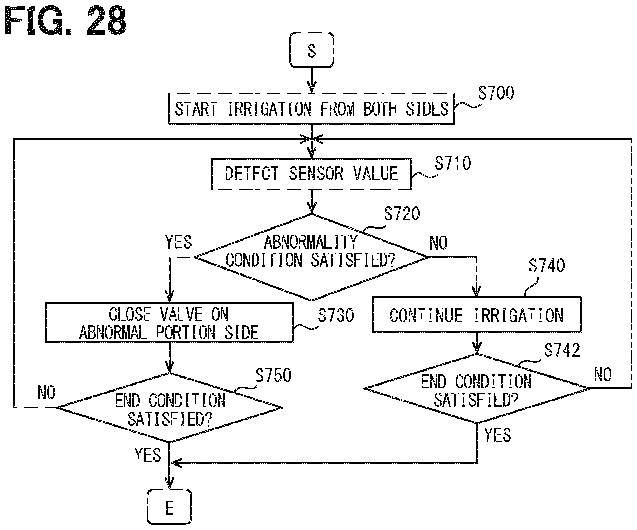

A fifth embodiment will be described with reference to FIGS. 28 to 30. The irrigation system 10 according to the fifth embodiment is different from the other embodiments in that water is supplied simultaneously from both one end portion and the other end portion during irrigation. Configurations, operations, and effects that are not particularly described in the fifth embodiment are the same as those of the above-described embodiment, and different points will be described below.

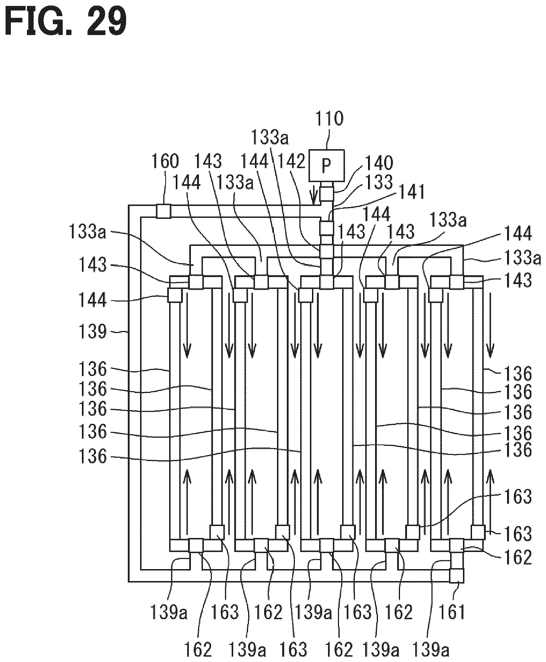

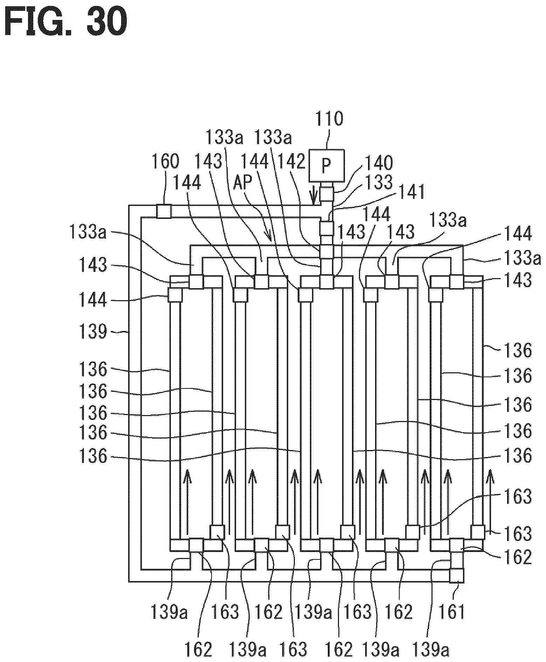

FIG. 28 is a flowchart showing an operation of a water supply valve according to a fifth embodiment when an abnormality is detected. FIG. 29 shows a positional relationship between a water supply valve and an abnormality sensor according to the fifth embodiment. FIG. 30 is a diagram for illustrating irrigation restoration according to the fifth embodiment when an abnormality is detected. The control process shown in FIG. 28 is executed in the water supply process shown in FIG. 9 or the irrigation process shown in FIG. 10. The integrated calculation unit 600 and the microcomputer 330 of the monitoring unit 300 that has received the water supply signal output from the integrated calculation unit 600 execute the water supply process shown in FIG. 28. The processes shown in FIG. 28 are mainly executed by the integrated calculation unit 600 or the microcomputer 330 of each monitoring unit 300. When the integrated calculation unit 600 mainly executes the processes, the microcomputer 330 described below is replaced with the integrated calculation unit 600. In step S700, the microcomputer 330 controls the first water supply valve and the second water supply valve to be in the opened state, and simultaneously performs the water supply from one end portion to the other end portion and the water supply from the other end portion to the one end portion. With the process, the water supply is performed from both the one end portion side and the other end portion side as shown in FIG. 29. The processes after step S710 are mainly executed by the microcomputer 330 of each monitoring unit 300. In step S710, the microcomputer 330 acquires a sensor value from the first abnormality sensor and a sensor value from the second abnormality sensor. In step S720, the microcomputer 330 determines whether the sensor values of the first abnormality sensor and the second abnormality sensor satisfy the abnormality conditions.

When it is determined in step S720 that none of the abnormality sensors is in the abnormal state, a process of continuing the irrigation is executed in step S740. The irrigation is continued until the irrigation end condition is satisfied in step S742. The irrigation end condition is the same as that in the first embodiment. When the microcomputer 330 determines in step S742 that the irrigation end condition is satisfied, the microcomputer 330 controls the water supply valves to the fully closed state to end the irrigation by the water supply from both sides.

FIG. 30 shows an example of a portion where an abnormality has been detected. When an abnormal state occurs in a portion viewed from the arrow AP shown in FIG. 30, normal irrigation from the distribution tubes 136 cannot be performed even when the water supply valve 143 is maintained in the opened state. When the abnormal state of a passage on one end portion side is determined in step S720 as shown in FIG. 30, a valve opening degree of the first water supply valve is controlled to change the first water supply valve from the opened state to the closed state in step S730. Specifically, the water supply valve 143 is changed from the opened state to the closed state. With the process, the valve on the one end portion side is closed, and only water supply from the other end portion is continued. At this time, a valve opening degree of the second water supply valve is controlled so that the water supplied from the other end portion satisfies the same target irrigation amount and target water splash distance as those during simultaneous irrigation from both sides.

With the process in step S730, the initial irrigation by the water supply from both sides is changed to irrigation by only the water supply from the other end portion to one end portion, and the normal irrigation is continued. The water supply from the other end portion to one end portion is continued until the irrigation end condition is satisfied in step S750. The irrigation end condition is the same as that in step S642. When the microcomputer 330 determines in step S750 that the irrigation end condition is satisfied, the microcomputer 330 controls the second water supply valve to be in the fully closed state to end the irrigation by the water supply from the other end portion to the one end portion.

The control device executes the following control in a state in which the water supply from one end portion side and the water supply from one end portion side are simultaneously performed. The control device closes one of the first water supply valve and the second water supply valve, which controls the pressure of water supplied from the side where the abnormal state has been detected, and opens another one of the first water supply valve and the second water supply valve, which controls the pressure of water supplied from the side where the abnormal state is not detected. According to the system, when water is supplied to the distribution tubes from both sides, it is possible to restore to the appropriate irrigation by switching to the water supply from the side where an abnormal state does not occur.

### <Sixth Embodiment>

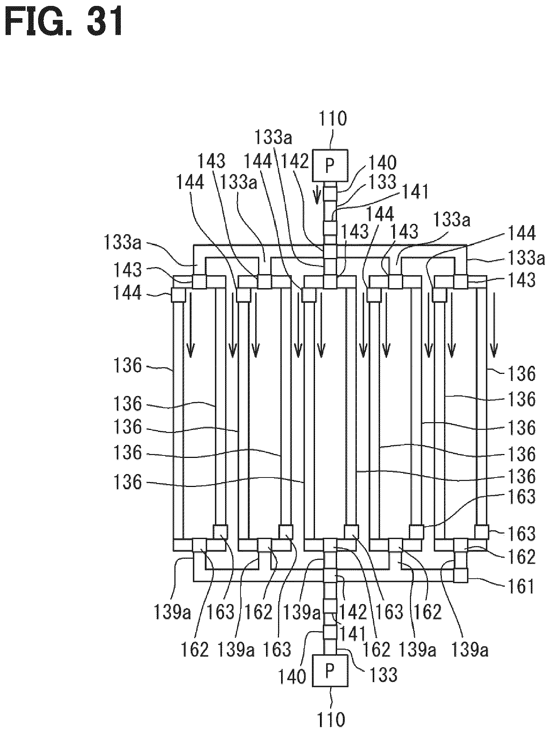

A sixth embodiment will be described with reference to FIG. 31. The irrigation system 10 according to the sixth embodiment has a configuration shown in FIG. 31 for a positional relationship between a water supply valve and an abnormality sensor. Configurations, operations, and effects that are not particularly described in the sixth embodiment are the same as those of the above-described embodiment, and different points will be described below.

The irrigation system 10 according to the sixth embodiment shown in FIG. 31 is different from the above-described embodiments in that two water supply sources are provided. The irrigation system 10 is configured such that the first coupling pipe 133a communicating with one end portion of each of the distribution tubes and the second coupling pipe 139a communicating with the other end portion of each of the distribution tubes receive supplied water from different water supply sources.

### <Other Embodiments>

The disclosure in the present description is not limited to the exemplary embodiments. The disclosure includes the exemplary embodiments and modifications made by those skilled in the art based on the exemplary embodiments. For example, the disclosure is not limited to the combination of components and elements described in the embodiments, and various modifications may be implemented. The disclosure may be implemented in various combinations. The disclosure may include an additional portion that can be added to the embodiments. The disclosure encompasses the omission of parts and elements of the embodiments. The disclosure encompasses the replacement or combination of components, elements between one embodiment and another. The disclosed technical scope is not limited to the description of the embodiments. The disclosed technical scope is indicated by the description of the claims, and should be construed to include all modifications within the meaning and scope equivalent to the description of the claims.

The distribution tube 136 provided in the irrigation system 10 may expand and contract according to the pressure of water flowing therein. In this case, the distribution tube 136 is formed of, for example, a material capable of elastically deforming according to the water pressure, and is formed to have hardness. The tube when the valve opening degree of the water supply valve is fully closed has a flat shape in which the tube is not expanded and which has an internal pressure of substantially zero at which an inside of the tube is not filled with water. In a state in which the valve opening degree of the water supply valve is fully opened and the water supply valve is fully expanded to the maximum limit due to the internal pressure, the tube does not expand and contract during water discharge from the tube, and the water discharge amount at the downstream portion of the tube is smaller than that at the upstream portion due to the water supply pressure loss. Therefore, the amount of water discharged from the tube varies in the extension direction of the tube.

In the intermediate state, the tube is not fully expanded and is in a state of being expandable and contractible by a slight change in the internal pressure. Therefore, the tube itself functions as a diaphragm due to a change in the internal pressure of the supplied water, and thus there is little difference in the water discharge amount between the downstream portion and the upstream portion of the tube. Therefore, the amount of water discharged from the tube is substantially uniform in the entire extension direction of the tube. The valve opening degree of the water supply valve 152 is controlled using a detection value of the water pressure sensor 153 or the like so as to reach an internal pressure at which the tube can expand and contract during the irrigation.

The irrigation system 10 according to the above-described embodiment may not include the environment sensor described in the first embodiment.

## Claims

1. An irrigation system comprising:
a distribution tube (136) to be provided in a farm field (20), in which a plant (30) is grown, and having a plurality of through holes to irrigate the farm field;
a first water supply valve (141, 143, 145) configured to control pressure of water, which is supplied from a one end portion side of the distribution tube to flow down from a one end portion to an other end portion of the distribution tube, to control an amount of irrigation water from the through holes of the distribution tube;
a second water supply valve (160, 162) configured to control pressure of water, which is supplied from an other end portion side of the distribution tube to flow down from the other end portion to the one end portion of the distribution tube, to control an amount of irrigation water from the through holes of the distribution tube;
a first abnormality sensor (142, 144) configured to detect an abnormal state of water supply from the one end portion side;
a second abnormality sensor (161, 163) configured to detect an abnormal state of water supply from the other end portion side; and
a control device (300) configured to control a valve opening degree of the first water supply valve and a valve opening degree of the second water supply valve, when an abnormal state is detected by the first abnormality sensor or the second abnormality sensor, wherein
the control device is configured to
close one of the first water supply valve and the second water supply valve, which controls pressure of water supplied from a side where the abnormal state has been detected, and
open an other one of the first water supply valve and the second water supply valve, which controls pressure of water supplied from a side where the abnormal state is not detected.

2. The irrigation system according to claim 1, wherein
the control device is configured to continue irrigation after opening the water supply valve, which controls pressure of water supplied from the side where the abnormal state is not detected, until a target irrigation amount or a target irrigation time is reached.

3. The irrigation system according to claim 1 or 2, wherein
the first water supply valve includes a plurality of water supply valves each configured to individually control pressure of supplied water flowing down to respective one of a predetermined number of the distribution tubes,
the second water supply valve includes a plurality of water supply valves each configured to individually control pressure of supplied water flowing down to respective one of the predetermined number of distribution tubes, and
the control device is configured to individually control a valve opening degree for each of the water supply valves of the first water supply valve and individually control a valve opening degree for each of the water supply valves of the second water supply valve to control pressure of supplied water for each of the predetermined number of distribution tubes corresponding to a portion where the abnormal state is detected.

4. The irrigation system according to any one of claims 1 to 3, further comprising:
a soil moisture sensor (311) to be provided in the farm field, to which the distribution tube is to be provided, and configured to detect a moisture content of soil, wherein
when the abnormal state is detected by the first abnormality sensor or the second abnormality sensor, the control device is configured to stop irrigation by closing the water supply valve based on information on the moisture content detected by the soil moisture sensor.

5. The irrigation system according to any one of claims 1 to 3, further comprising:
a soil moisture sensor (311) to be provided in the farm field, to which the distribution tube is to be provided, and configured to detect a moisture content of soil, wherein
when the abnormal state is detected by the first abnormality sensor or the second abnormality sensor, the control device is configured to continue irrigation by closing the water supply valve, which controls pressure of water supplied from the side where the abnormal state has been detected, and opening the water supply valve, which controls pressure of water supplied from the side where the abnormal state is not detected, based on information on the moisture content detected by the soil moisture sensor.

6. The irrigation system according to any one of claims 1 to 4, wherein
in a state in which water supply from the one end portion side and water supply from the one end portion side are simultaneously performed, the control device is configured to
close one of the first water supply valve and the second water supply valve, which controls pressure of water supplied from the side where the abnormal state has been detected, and
open another one of the first water supply valve and the second water supply valve, which controls pressure of water supplied from the side where the abnormal state is not detected.

7. A control device configured to control
a valve opening degree of a first water supply valve (141, 143, 145) configured to control pressure of water supplied from a one end portion side of a distribution tube (136), which has a plurality of through holes, to flow down from one end portion to an other end portion of the distribution tube to control an amount of irrigation water from the through holes of the distribution tube, and
a valve opening degree of a second water supply valve (160, 162) configured to control pressure of water supplied from an other end portion side of the distribution tube to flow down from the other end portion to the one end portion of the distribution tube to control an amount of irrigation water from the through holes of the distribution tube, the control device comprising:
a calculation unit (334) configured to detect occurrence of an abnormal state in water supply from the one end portion side or an abnormal state in water supply from the other end portion side, based on a sensor value detected by a first abnormality sensor (142, 144), which is configured to detect an abnormal state of water supply from the one end portion side, or a sensor value detected by a second abnormality sensor (161, 163), which is configured to detect an abnormal state of water supply from the other end portion side; and
an output unit (332) configured to output a control signal to control the valve opening degree of the first water supply valve and the valve opening degree of the second water supply valve, when occurrence of the abnormal state is detected, wherein
the output unit is configured to output the control signal to close one of the first water supply valve and the second water supply valve, which controls pressure of water supplied from a side where the abnormal state has been detected, and open an other one of the first water supply valve and the second water supply valve, which controls pressure of water supplied from a side where the abnormal state is not detected.

8. The control device according to claim 7, wherein
the calculation unit is configured to determine whether a target irrigation amount or a target irrigation time has been reached after the water supply valve, which controls pressure of the water supply from the side where the abnormal state is not detected, is opened, and
the output unit is configured to continue to output the control signal until the calculation unit determines that the target irrigation amount or the target irrigation time has been reached.

9. The control device according to claim 7, wherein
when the abnormal state has been detected by the first abnormality sensor or the second abnormality sensor, the calculation unit is configured to determine whether to stop irrigation based on information on a moisture content detected by a soil moisture sensor (311) to be provided in a farm field, to which the distribution tube is to be provided, and
when the calculation unit has determined to stop the irrigation, the output unit is configured to output a control signal to close the water supply valve.

10. The control device according to any one of claims 7 to 9, wherein
when the abnormal state is detected by the first abnormality sensor or the second abnormality sensor, the calculation unit is configured to determine whether to continue irrigation based on information on a moisture content detected by a soil moisture sensor (311) to be provided in a farm field, to which the distribution tube is to be provided, and
when the calculation unit has determined to continue the irrigation, the output unit is configured to output a control signal to close the water supply valve, which controls pressure of water supplied from the side where the abnormal state has been detected, and to open the water supply valve, which controls pressure of water supplied from the side where the abnormal state is not detected.
